(19) **Europäisches Patentamt / European Patent Office / Office européen des brevets**

(11) **EP 4 437 321 B1**

(12) **EUROPEAN PATENT SPECIFICATION**

(45) Date of publication and mention
of the grant of the patent:
**15.07.2026 Bulletin 2026/29**

(21) Application number: **22823624.6**

(22) Date of filing: **23.11.2022**

(51) International Patent Classification (IPC):
**G01N 15/1031** (2024.01)    **G01N 15/02** (2024.01)
**G01N 15/00** (2024.01)    **H01J 49/00** (2006.01)
**H01J 49/10** (2006.01)

(52) Cooperative Patent Classification (CPC):
**G01N 15/02; G01N 15/1031; H01J 49/0036;**
**H01J 49/105;** G01N 2015/0038; G01N 2015/1021;
G01N 2015/1024

(86) International application number:
**PCT/IB2022/061334**

(87) International publication number:
**WO 2023/095020 (01.06.2023 Gazette 2023/22)**

(54) **SINGLE-PARTICLE INDUCTIVELY-COUPLED PLASMA MASS SPECTROMETRY PARTICLE SIZING AND COUNTING METHOD, SYSTEM AND COMPUTER PROGRAM**

VERFAHREN ZUR GRÖSSENBESTIMMUNG UND ZÄHLUNG VON INDUKTIV GEKOPPELTEN EINZELPARTIKELPLASMAMASSENSPEKTROMETRIEPARTIKELN, SYSTEM UND COMPUTERPROGRAMM

PROCÉDÉ DE GRANULOMÉTRIE ET DE COMPTAGE DE PARTICULES À SPECTROMÉTRIE DE MASSE À PLASMA À COUPLAGE INDUCTIF DE PARTICULE UNIQUE, SYSTÈME ET PROGRAMME INFORMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.11.2021 EP 21210751**

(43) Date of publication of application:
**02.10.2024 Bulletin 2024/40**

(73) Proprietor: **ECOLE POLYTECHNIQUE FEDERALE DE LAUSANNE (EPFL)**
**1015 Lausanne (CH)**

(72) Inventor: **KOOLEN, Cedric David**
**1950 Sion (CH)**

(74) Representative: **Byrne, Declan**
**André Roland SA**
**IP Attorneys & Services**
**Avenue Collonges 21**
**1004 Lausanne (CH)**

(56) References cited:
**CN-A- 106 872 558    US-A1- 2015 235 833**

• **EVELYN L. ROSEN ET AL: "Exceptionally Mild Reactive Stripping of Native Ligands from Nanocrystal Surfaces by Using Meerwein’s Salt", ANGEWANDTE CHEMIE INTERNATIONAL EDITION, vol. 51, no. 3, 16 January 2012 (2012-01-16), pages 684 - 689, XP055132105, ISSN: 1433-7851, DOI: 10.1002/ anie.201105996**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**CROSS-REFERENCE TO RELATED APPLICATIONS**

The present application claims priority to European patent application EP21210751.0 filed on November 26th, 2021.

**FIELD OF THE INVENTION**

The present disclosure relates to particle sizing and particle counting using single-particle inductively-coupled plasma mass spectrometry. The present disclosure relates to particle sizing and counting of inorganic nanoparticles, for example, to particle sizing and counting of anisotropic or isotropic polyelemental (containing more than one element in a single nanoparticle) inorganic nanoparticles.

**BACKGROUND**

Nanoparticle size and shape have shown to play an important role in a variety of physical and chemical processes including light-matter interactions, magnetism, (electro)catalysis etc.[1,2,3,4] To determine structure-property relations for such phenomena, accurate and precise description of size and shape is obligatory. Traditionally, nanomaterials are sized through the production of SEM and or TEM micrographs and subsequent edge-length analysis.[5,6] Several commercial and or open-source software image processing packages exist that can be of aid herein.[7,8,9] However, such automated sizing approaches have not yet found wide rapport as image processing techniques suffer from poor image contrast, particle clustering and cannot distinguish between different elements or phases. Automated sizing success is often frustrated by tedious sample preparation steps and large quantities of micrographs needed for reasonable statistics.[9,10] Therefore, more often than not, researchers fall back on old-fashioned manual particle counting instead, which is prone to *bias.*

US2015235833A1 discloses methods and systems for automated analysis of spectrometry data corresponding to particles of a sample, such as large data sets obtained during single particle mode analysis of an inductively coupled plasma mass spectrometer (SP-ICP-MS). Techniques are presented that provide appropriate smoothing for rapid data processing without an accompanying reduction (or with an acceptably negligible reduction) in accuracy and/or precision.

Born out of an aversion for particle counting and with the goal of addressing the previously mentioned inconveniences of the prior art, the inventors have developed a one-size-fits-all method or protocol to simultaneously size and count, for example, several *thousands* of inorganic nanoparticles and nanocrystals in a matter of *minutes,* independent of size, shape, and element, based on single-particle inductively-coupled plasma mass spectrometry (SP-ICP-MS).

**SUMMARY**

It is therefore one aspect of the present disclosure to provide a single-particle inductively-coupled plasma mass spectrometry particle sizing and counting method according to claim 1. The method comprises:

- providing or receiving an intensity ($I_p$)-versus-counts (Cts) histogram of particles detected by an inductively-coupled plasma mass spectrometer (ICP-MS) the intensity ($I_p$) representing particle detection and the count (Cts) representing particle detection frequency,
- providing or receiving mass flux calibration data relating a value of the intensity ($I_p$) measurement or data of the inductively-coupled plasma mass spectrometer to a mass of material detected per acquisition interval or dwell time,
- determining a particle mass ($m_p$) of the particles detected using the mass flux calibration data,
- determining a particle volume ($V_p$) of the detected particles using the determined particle mass ($m_p$) and determining a particle size of the particles detected using the determined particle volume ($V_p$) of the particles detected and a determined or attributed geometry or shape of the detected particles,

and is characterised in that the intensity ($I_p$)-versus-counts (Cts) histogram of particles detected by the inductively-coupled plasma mass spectrometer (ICP-MS) is determined using obtained, per acquisition interval or dwell time, intensity (Ip) measurements obtained by the inductively-coupled plasma mass spectrometer, the obtaining having been repeated over a total time duration to obtain a plurality of said intensity (Ip) measurements per acquisition interval or dwell time, and wherein the intensity-versus-counts histogram is determined by (i) relating each intensity measurement of the plurality of said intensity (Ip) measurements per acquisition interval or dwell time to (ii) the number of times that intensity (Ip) measurement has been obtained, wherein the intensity (Ip) measurement of the histogram relates to a detected particle, and the counts relates to the number of times that particle has been detected.

A further aspect of the present disclosure concerns a system according to claim 14 including a processor and a memory including a computer program comprising instructions which, when the computer program is executed by the processor, cause the system to carry out the method of claim 1, the method comprising the steps of:

- receiving (S1) an intensity (Ip)-versus-counts (Cts) histogram of particles detected by an inductively-coupled plasma mass spectrometer (ICP-MS), the intensity (Ip) representing particle detection and the count (Cts) representing particle detection frequency,
- receiving (S2) mass flux calibration data relating a value of the intensity (Ip) measurement or data of the inductively-coupled plasma mass spectrometer to a mass of material detected per acquisition interval or dwell time,
- determining (S3) a particle mass (mp) of the particles detected using the mass flux calibration data,
- determining (S4) a particle volume (Vp) of the detected particles using the determined particle mass (mp), and
- determining (S5) a particle size of the particles detected using the determined particle volume (Vp) of the particles detected and a determined or attributed geometry or shape of the detected particles; characterized in that the intensity (Ip)-versus-counts (Cts) histogram of particles detected by the inductively-coupled plasma mass spectrometer (ICP-MS) is determined using obtained, per acquisition interval or dwell time, intensity (Ip) measurements obtained by the inductively-coupled plasma mass spectrometer, the obtaining having been repeated over a total time duration to obtain a plurality of said intensity (Ip) measurements per acquisition interval or dwell time, and wherein the intensity (Ip)-versus-counts (Cts) histogram is determined by relating (i) each intensity (Ip) measurement of the plurality of said intensity (Ip) measurements per acquisition interval or dwell time to (ii) the number of times that intensity (Ip) measurement has been obtained, wherein the intensity (Ip) measurement of the histogram relates to a detected particle, and the counts relates to the number of times that particle has been detected.

A further aspect of the present disclosure concerns a computer program comprising instructions which, when the program is executed by a computer, cause the computer to carry out the method for single-particle inductively-coupled plasma mass spectrometry particle sizing and counting according to claim 1, the method comprising the steps of:

- receiving (S1) an intensity (Ip)-versus-counts (Cts) histogram of particles detected by an inductively-coupled plasma mass spectrometer (ICP-MS), the intensity (Ip) representing particle detection and the count (Cts) representing particle detection frequency,
- receiving (S2) mass flux calibration data relating a value of the intensity (Ip) measurement or data of the inductively-coupled plasma mass spectrometer to a mass of material detected per acquisition interval or dwell time,
- determining (S3) a particle mass (mp) of the particles detected using the mass flux calibration data,
- determining (S4) a particle volume (Vp) of the detected particles using the determined particle mass (mp), and
- determining (S5) a particle size of the particles detected using the determined particle volume (Vp) of the particles detected and a determined or attributed geometry or shape of the detected particles; characterized in that the intensity (Ip)-versus-counts (Cts) histogram of particles detected by the inductively-coupled plasma mass spectrometer (ICP-MS) is determined using obtained, per acquisition interval or dwell time, intensity (Ip) measurements obtained by the inductively-coupled plasma mass spectrometer, the obtaining having been repeated over a total time duration to obtain a plurality of said intensity (Ip) measurements per acquisition interval or dwell time, and wherein the intensity (Ip)-versus-counts (Cts) histogram is determined by relating (i) each intensity (Ip) measurement of the plurality of said intensity (Ip) measurements per acquisition interval or dwell time to (ii) the number of times that intensity (Ip) measurement has been obtained, wherein the intensity (Ip) measurement of the histogram relates to a detected particle, and the counts relates to the number of times that particle has been detected.

Specific embodiments and other advantageous features can be found in the dependent claims. As known to the skilled person in the art, the inductively-coupled plasma mass spectrometer is configured to use an inductively-coupled plasma to atomize and ionize samples to be analyzed and to carry out inductively-coupled plasma mass spectrometry.

The inductively-coupled plasma mass spectrometer may include, for example, a peristaltic pump and a nebulizer for sample introduction and aerosol production, an inductively-coupled plasma torch, configured to generate an inductively-coupled plasma, and a mass spectrometer, comprising of a mass analyzer such as a quadrupole or time-of-flight tube and an ion detector such as an electron multiplier, configured to select and detect ions based on their mass-to-charge ratio.

Single-particle inductively-coupled plasma mass spectrometry is used to measure and provide a detected signal representing the detection of particles over a given period/interval by the detector of the inductively-coupled plasma mass spectrometer. A background signal is then removed from the measured particle detection data to provide an intensity $I_p$-versus-counts histogram of particles detected.

Dissolved metal calibration data or a dissolved metal calibration curve relating a measured intensity to concentration is measured using the inductively-coupled plasma mass spectrometer and is converted to a mass flux calibration data or a mass flux calibration curve data. This is used to calculate a particle mass $m_p$ of the particles detected and a particle volume $V_p$. The known geometry or shape of the particles and the calculated particle volume $V_p$ is used to calculate particle size and a particle size distribution. Measured SP-ICP-MS data and measured or known particle properties are used to calculate a particle size distribution. Further details are provided below in the detailed description.

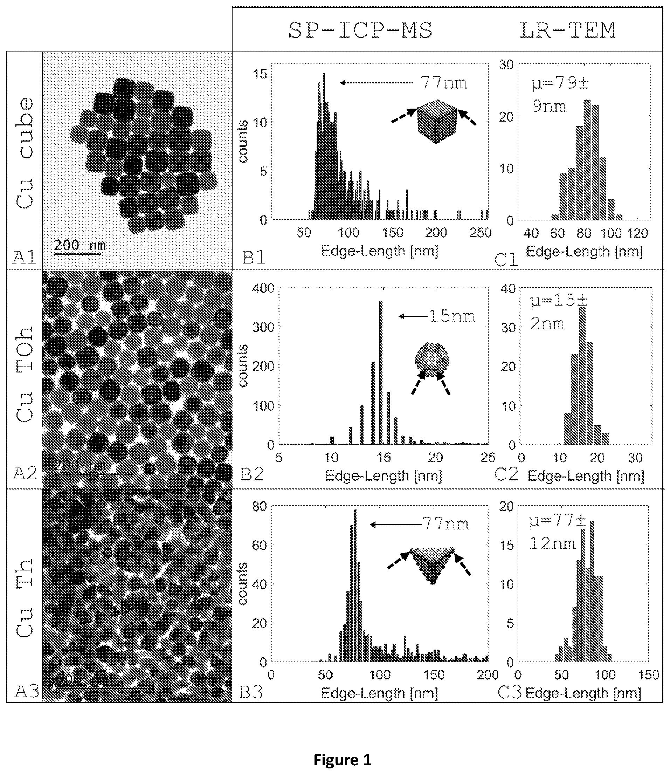

This innovative technique of the present disclosure is entirely void of bias as every *single particle* is counted. Using developed syntheses, the inventors show the capabilities of SP-ICP-MS to size and count, for example, (an) isotropic (bi)metallic nanoparticles including but not limited to spheres, cubes, tetrahedra and truncated octahedra (Figure 1).

As shown in the panels of Figure 1, excellent agreement is found between the particle size and particle size distribution determined by the present invention (SP-ICP-MS panels B1 to B3 of Figure 1) and conventional sizing data (low-resolution transmission electron microscopy (LR-TEM) panels C1 to C3 of Figure 1). Furthermore, aggregates in the sample are observed (counts at the far end of the distributions) which are missed by TEM, giving a more complete picture of the ensemble without bias.

This method according to the present disclosure is expected to find use in, amongst others, materials science, materials chemistry, (nano)physics, (nano)photonics, (photo)catalysis and electrochemistry.

The above and other objects, features and advantages of the present invention and the manner of realizing them will become more apparent, and the invention itself will best be understood from a study of the following description with reference to the attached drawings showing some preferred embodiments of the invention.

## BRIEF DESCRIPTION OF THE DRAWINGS

The accompanying drawings, which are incorporated herein and constitute part of this specification, illustrate the presently preferred embodiments of the invention, and together with the general description given above and the detailed description given below, serve to explain features of the invention.

Figure 1 shows, in panels A1, A2, A3, TEM micrographs of cubic (C), truncated octahedral (TOh), and tetrahedral (Th) Cu nanocrystals synthesized using a phosphine-derivative mediated wet-chemical procedure, Scale-bar = 200 nm. Panels B1, B2, B3 of Figure 1 show size-distributions obtained of the C-, TOh- and Th-Cu nanocrystals using SP-ICP-MS and the method of the present disclosure. The particle most frequently observed had an edge-length of: 77, 15 and 77 nm, respectively. Edge-length is defined as the center-to-center distance between two corner atoms of a particle (depicted in the darkest shade in the ball models in the inset, some of which are indicated by dashed arrows). The total number of particles observed was >1000 for each measurement of 100 sec duration. Panels C1, C2, C3 of Figure 1 show size-distributions of 100 C-, TOh- and Th-Cu nanocrystals using particle counting using LR-TEM images. Excellent agreement exists between the SP-ICP-MS method of the present disclosure and conventional sizing data shown in panels C1, C2, C3 of Figure 1. Furthermore, aggregates in the sample are observed (counts at the far end of the distributions) missed by TEM, giving a more complete picture of the ensemble without bias.

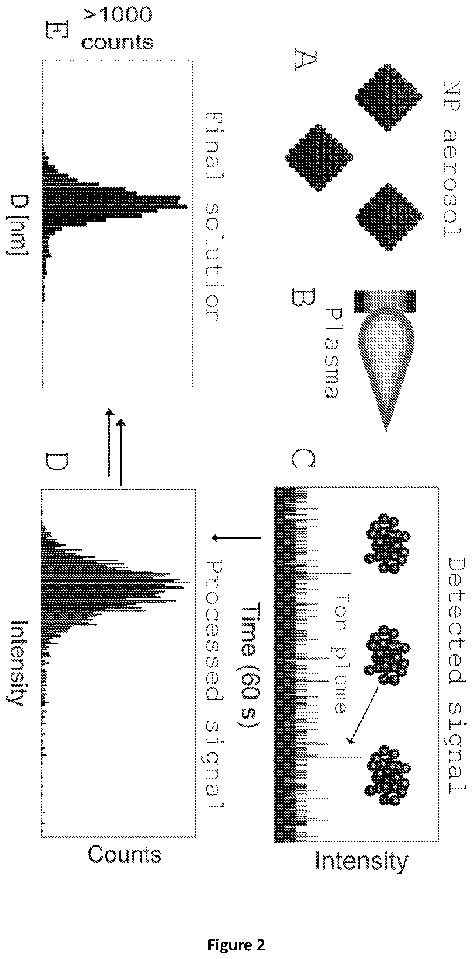

Figure 2 shows a general approach according to the present disclosure to obtaining size-distributions of nanoparticle dispersions using SP-ICP-MS and the method according to the present disclosure. Figure 2A shows a nanoparticle (NP) aerosol formed after nebulization of the sample dispersions. Figure 2B shows a plasma torch of the ICP-MS instrument used for the atomization and ionization of the particles in the aerosol. Figure 2C shows SP-ICP-MS raw data containing both background signal (dissolved ions) and particle events (ion plumes). Figure 2D shows a histogram of the raw data obtained via, for example, a sorting algorithm after background subtraction equating the intensity to the number of observations (counts). Figure 2E shows a final solution of SP-ICP-MS data processing pipeline.

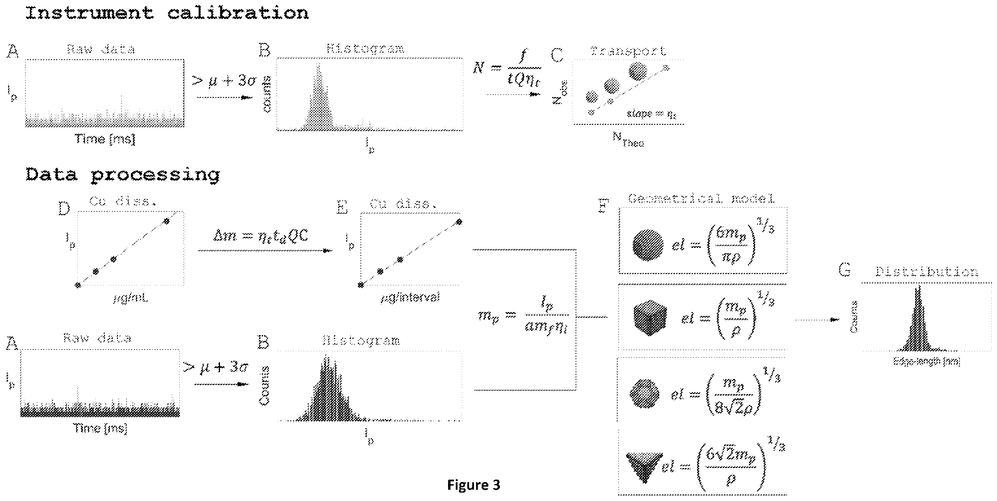

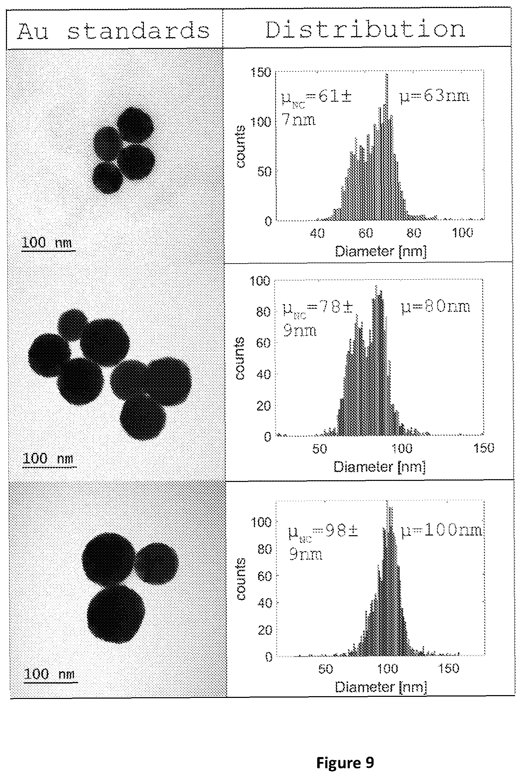

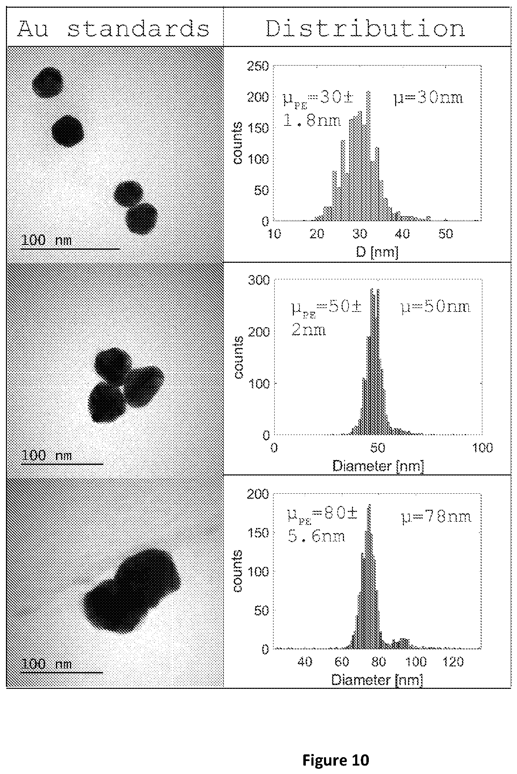

Figure 3 shows instrument calibration and data processing steps. Figure 3A shows an intensity versus time plot of the SP-ICP-MS raw data of a calibrant (top) and analyte (bottom). Figure 3B shows an intensity-versus-counts histogram of a calibrant (top) and analyte (bottom). Figure 3C shows a transport efficiency ($\eta_t$) calibration curve of particle dispersions of known size and number concentration (in the present disclosure Au NP are used for example but not limited thereto (see also below and Figures 9 and 10)). Figure 3D is a standard solution calibration curve (dissolved Cu for example in the present disclosure but not limited thereto). Figure 3E is a converted mass/interval calibration curve of the dissolved ion standard (for example, dissolved Cu in the present disclosure but not limited thereto). Figure 3F shows various geometrical models to extract dimensional parameters such as edge-length including but not limited to spheres, cubes, truncated octahedra and tetrahedra. Figure 3G shows a final solution of the SP-ICP-MS data processing pipeline but is not limited thereto.

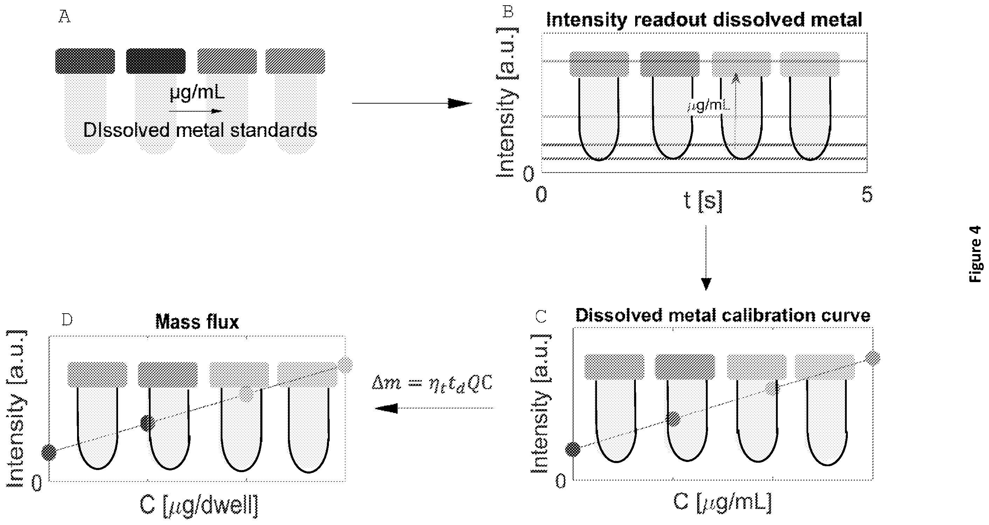

Figure 4A is a schematic of dissolved metal solutions prepared from ion standards of known concentrations. Figure 4B shows the average intensity measured for each individual standard solution. Figure 4C shows the dissolved metal calibration curve relating the measured intensity to the concentration. Figure 4D shows the mass flux calibration curve relating the intensity to the mass per dwell.

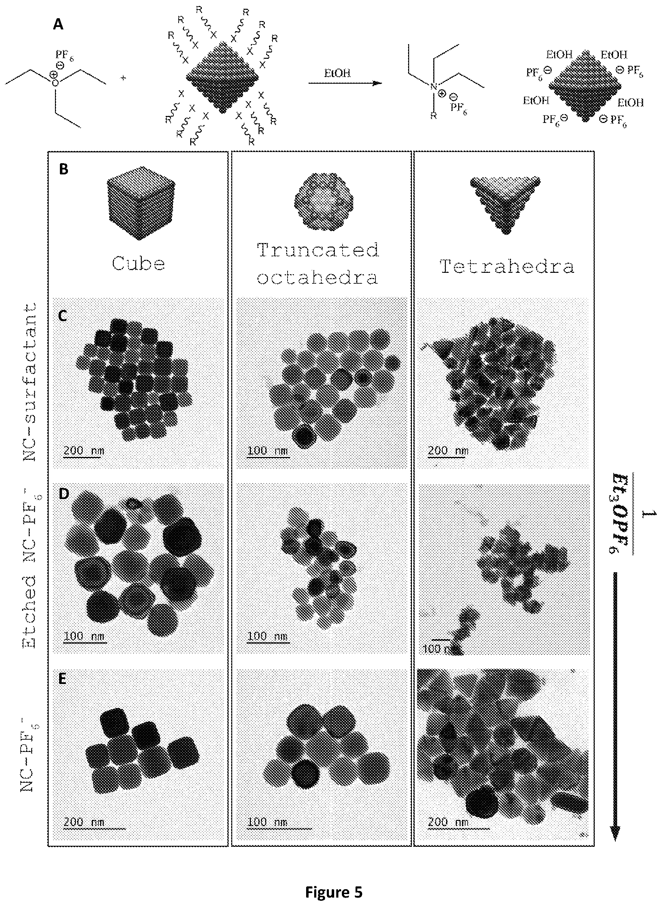

Figure 5 shows exemplary sample preparation and solvent transfer via surfactant stripping using triethyl oxonium hexafluorophosphate. Figure 5A is a schematic representation of the surfactant stripping. Figure 5B shows ball models of the synthesized anisotropic nanocrystals: cube (C), truncated octahedra (TOh) and tetrahedra (Th), respectively. The coloring of the surface atoms describes their specific nature. Darkest tone: corner atoms with coordination numbers (CN)<6, one tone lighter: edge atoms with CN<9, second lightest tone: Cu(100) and finally the lightest tone: Cu(111). Figure 5C shows TEM micrographs of the as-synthesized anisotropic nanocrystals capped with their native surfactants: oleylamine, trioctylphosphine, trioctylphosphine oxide. Figure 5D shows partially edged crystals as a result of too high Meerwein's salt concentrations during the surfactant stripping reaction. Figure 5E shows $PF_6^-$-stabilized, surface intact nanocrystals dispersible in any polar solvent including water, methanol (MeOH), ethanol (EtOH), isopropanol (iPrOH), dimethyl formamide (DMF) but not limited thereto.

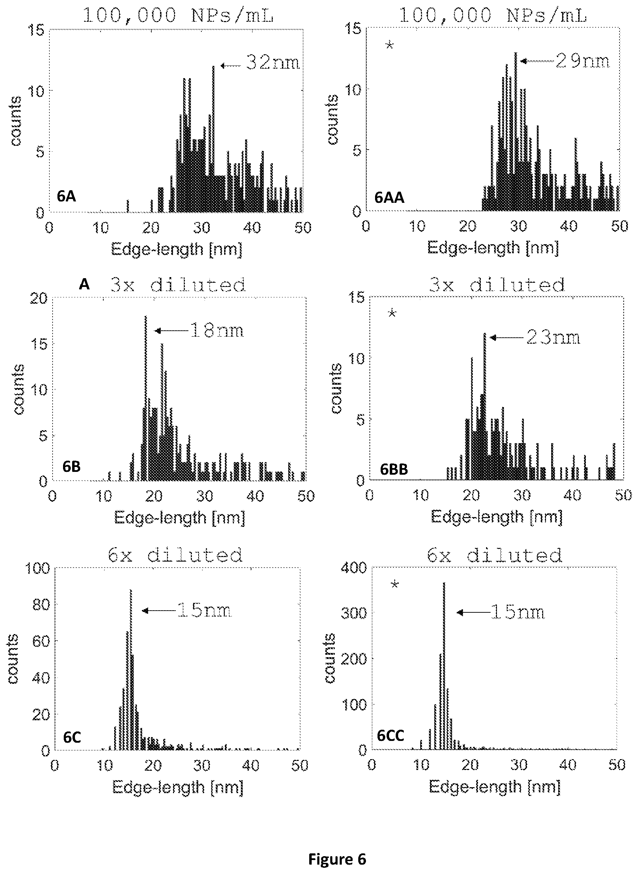

Figures 6A, 6AA, 6B, 6BB, 6C and 6CC show a dilution series of TOh Cu nanoparticles. Number concentration (N): $10^5$, $1/3 \cdot 10^5$ and $1/6 \cdot 10^5$ NP/mL. Shift of the average mass to lower values as evidenced by the value of the most frequent observed size shows the particle concentration problem. If $N$ is too high and the background is too high, ion plumes derived from initial particles arrive at the detector at such short intervals that their mass cannot be resolved and are, therefore, assigned to the same particle event. Optimization and calibration of $N$ is instrumental to correct mass assignment. This feature perseveres even with an independent instrument calibration used. The gain in the number of counts is evidence that multiple particle events are excluded and particle events can be fully resolved.

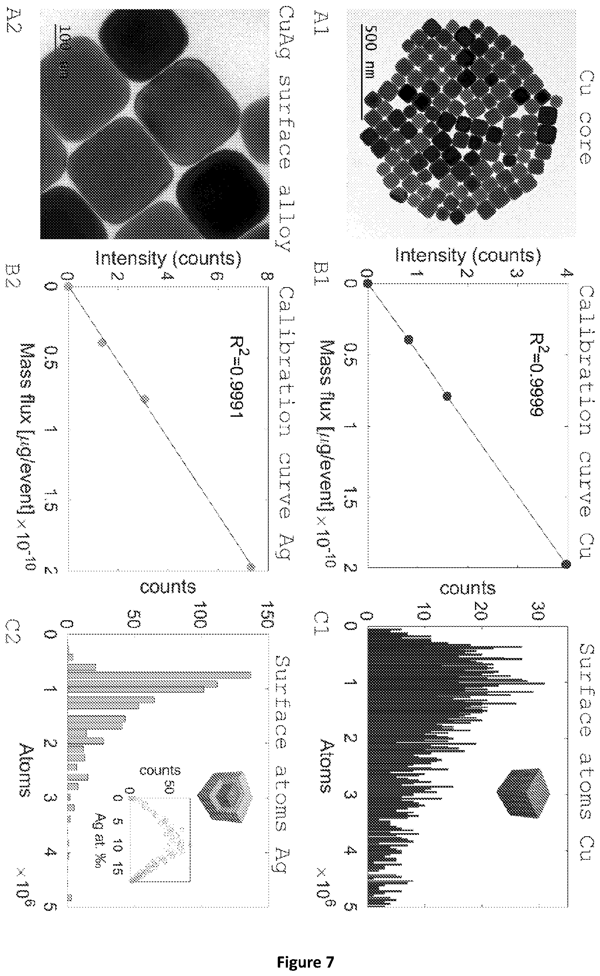

Figure 7 shows SP-ICP-MS of the present disclosure as a method to characterize anisotropic nanosurface alloys (NSA).[11] The Cu-cube nanocrystals synthesized in the present disclosure were coated with an ultrathin shell of Ag using a galvanic exchange reaction (see below,

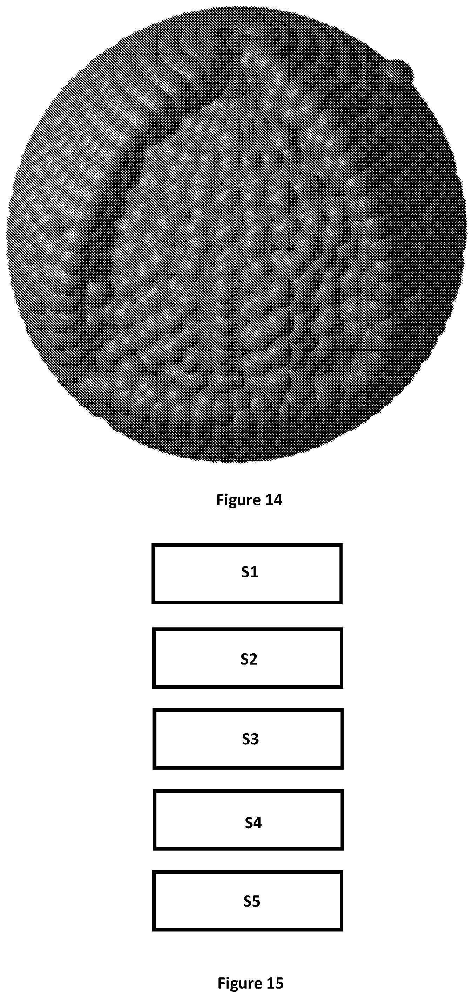

Figures 9 and 10). Figures 7A1-7A2 show TEM micrographs of the Cu cubic core and the CuAg cubic NSA, respectively. Figures 7B1-7B2 show Cu and Ag mass flux calibration curves used to quantify signal/dwell. Figure 7C1 shows that using a subsurface model (Figure 14), the Cu particle mass distribution obtained with SP-ICP-MS can be converted into an ensemble distribution of surface atoms. Figure 7C2 shows a distribution of Ag atoms obtained via SP-ICP-MS. By taking the ensemble average, the inventors deduct that 0.59 monolayer of Ag has been deposited. Inset shows the normally distributed doping concentration of Ag.

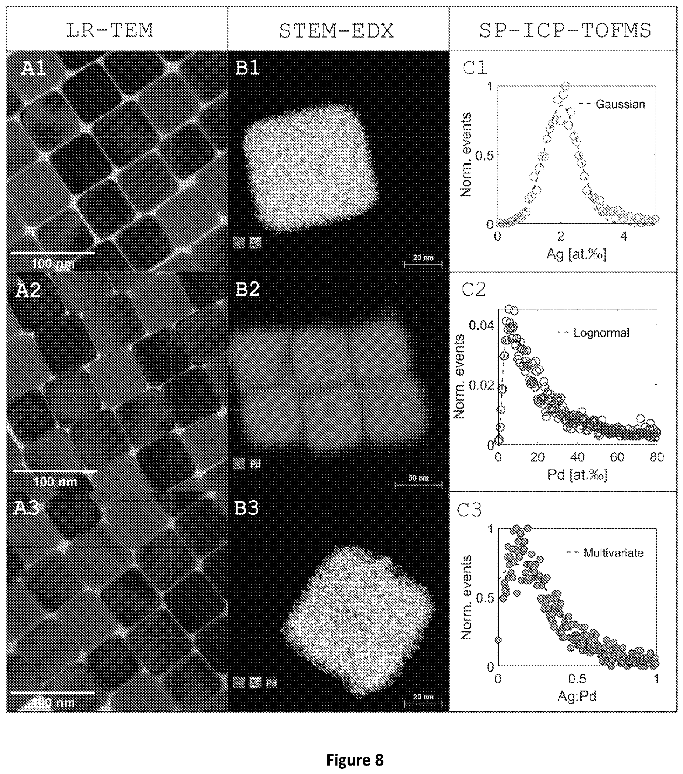

Figure 8 shows, in Figures 8A1-8A3, TEM micrographs of C-CuAg, C-CuPd, and C-CuPdAg multimetallic NPs, respectively. Figures 8B1-8B3 show STEM-EDX elemental maps of C-CuAg, C-CuPd, and C-CuPdAg NPs. Figures 8C1-8C3 show normalized composition distributions of C-CuAg, C-CuPd, and C-CuPdAg multimetallic NPs obtained with a TOF mass analyzer. The C-CuAg and C-CuPdAg distributions were normalized by the number of events. The C-CuPd distribution was normalized so that the probability density function integral equaled to one. In Figure 8C1, the C-CuAg distribution shows that Ag is normally distributed around the mean, corroborating the results obtained using the quadrupole (Gaussian fit: $R^2$ = 0.9723). In Figure 8C2, the C-CuPd is lognormally distribution evidenced by the positive skew ($R^2$ = 0.9816), and in Figure 8C3 the C-CuPdAg distribution shows again a normal distribution ($R^2$ = 0.9467).

Figure 9 shows NanoComposix Au standard particle samples: 61, 78 and 98 nm. 50,000 NPs/mL.

Figure 10 shows PerkinElmer standard Au samples: 30, 50 and 80 nm. 50,000 NPs/mL.

Figure 11 shows a Cu dissolved standard calibration curve.

Figure 12 shows a dilution series Th using calibrants of Figures 9 and 10.

Figure 13 shows surface atom compositions of Th and TOh CuAg surface alloy nanocrystals as determined by SP-ICP-MS.

Figure 14 shows a ball model describing the subsurface approach to the determination of the number of surface atoms. The surface atoms in the geometrical model consist of a single monolayer.

Figure 15 schematically shows exemplary steps of the single-particle inductively-coupled plasma mass spectrometry particle sizing and counting method of the present disclosure.

Herein, identical reference numerals are used, where possible, to designate identical elements that are common to the Figures. Also, the images are simplified for illustration purposes and may not be depicted to scale.

## DETAILED DESCRIPTION OF SEVERAL EMBODIMENTS

Routine inductively-coupled plasma mass spectrometry (ICP-MS) is used to determine metal concentrations of ion solutions. In the framework of nanomaterials, this entails the digestion of particulate matter using strong acids such as nitric acid ($HNO_3$), hydrochloric acid (HCl) or aqua regia yielding dissolved ion solutions of the respective materials. Detected based on their mass-to-charge ratio, ion intensities can be related to element specific, absolute concentrations via so-called calibration curves based on elemental standard solutions of known concentration.[12] This allows for the determination of elemental make-up, synthesis yields, dispersion concentrations etc. Multiple intensity readings are often acquired and averaged over long acquisition intervals, or dwell times (ms to s) to obtain time averaged ion concentrations improving signal to noise.

In contrast, in single-particle inductively-coupled plasma mass spectrometry (SP-ICP-MS), undigested dispersions are nebulized and introduced to the plasma torch directly, after which individual particles become atomized and ionized, and arrive at the mass analyzer as discrete ion packages, or ion plumes (see for example Figure 2).[13] This is distinctively different from dissolved ion intensities, or background signal. Intensity spikes above the background herald the arrival of an ion plume or particle event at the detector. To distinguish between these discrete particle events and the dissolved ions, acquisition times much shorter than ICP-MS are needed ($\mu$s-ms). Each individual acquisition of the intensity read-out (per dwell time) is then plotted against time obtaining the SP-ICP-MS raw data (Figure 2C).

With a sorting algorithm, combined with a mathematical background subtraction process, histograms, relating a given intensity to number of times it has been observed, are produced. Each intensity is then related to the number of ions in the plume, and thereby the mass of the initial particle ionized, and the frequency, or counts, to the number of times a particle of that specific mass has been observed. With a known particle geometry, the particle mass can then be converted, using the density, into a particle size. Further, the total number of counts is directly proportional to the number concentration. Several steps have to be executed, however, before raw SP-ICP-MS data can be transformed into a meaningful data-set such as a size-distribution.[14,15] Traditionally, SP-ICP-MS has been used to determine particle concentrations and size distributions of poorly defined, crude dispersions relevant to environmental research, health and or food sciences, limited to metal oxides and noble metals such as Au, Ag, and Pt.[16,17, 18, 19,13]

In contrast, the inventors present a generalized quantitative method to use SP-ICP-MS to accurately describe and characterize well-defined inorganic nanoparticles of various size, shape and compositions independent of elemental make-up and with high precision, complementary to electron microscopy. A detailed description of the method according to the present disclosure is now provided, and in particular of the instrument calibration and data processing pipeline. Steps S1 to S5 of the single-particle inductively-coupled plasma mass spectrometry particle sizing and counting method of the present disclosure are schematically shown in Figure 15.

The method comprises providing or receiving (S1) an intensity $I_p$ versus-counts Cts histogram of particles detected by an inductively-coupled plasma mass spectrometer ICP-MS. The histogram may, for example, be provided or received as data representing the histogram that can then be processed. The intensity $I_p$ represents particle detection and the count Cts represents particle detection frequency. Mass flux calibration data relating a value of the intensity $I_p$ measurement or data of the inductively-coupled plasma mass spectrometer to a mass of material detected per acquisition interval or dwell time is also provided or received (S2).

A particle mass $m_p$ of the particles detected using the mass flux calibration data is determined (S3). A particle volume $V_p$ of the detected particles is determined (S4) using the determined particle mass $m_p$. A particle size of the particles detected is determined (S5) using the determined particle volume $V_p$ of the particles detected and a determined or attributed geometry or shape of the detected particles. Inductively-coupled plasma mass spectrometers are known and detailed in, for example, Thomas 2003[20].

Figure 3 shows more details and shows exemplary steps of the method of the present disclosure, and in particular shows instrument calibration and data processing steps.

As described previously, SP-ICP-MS data consists of an intensity as a function of time (Figure 3A). This includes a background signal of, for example, trace metal ions and particle events evidenced by spikes in the intensity above the background. In order to extract all particle events, background subtraction is performed. This is, for example, achieved mathematically by averaging over all intensities and determining the standard deviation ($\sigma$). A particle event is then, for example, defined as any intensity $3\sigma$ (for example) above the background.[21,22] This is done iteratively. After the first set of particle events has been collected, the $\sigma$ of the new data-set is determined and the process repeated until no signal $>3\sigma$ remains. All extracted particle events are than sorted based on their respective intensity values, and reported as a counts-versus-intensity histogram (Figure 3B). An intensity $I_p$ versus-counts Cts histogram of particles detected using an inductively-coupled plasma mass spectrometer ICP-MS is thus provided or received (S1) as part of the present method.

The intensity ($I_p$)-versus-counts (Cts) histogram is provided by obtaining or measuring intensity ($I_p$) measurements representing particle detection as a function of time using the inductively-coupled plasma mass spectrometer, and removing a background intensity signal from the intensity ($I_p$) measurements as a function of time. The removing of the background signal is, for example, carried out by averaging over all intensity values and determining a standard deviation $\sigma$, and defining a particle detection as any intensity value that is, for example, at least 3 times the standard deviation $\sigma$ + the mean $\mu$ above a background intensity value, and arranging the particle detections based on their respective intensity values and as a counts-versus-intensity histogram.

The total number of counts is a direct measure of the number of particles that have reached the detector, which can be converted into a number concentration using Eq. 1:

$$N = \frac{f}{Qt}$$

in which $N$ is the number concentration (NPs/mL), $f$ the number of counts per acquisition (cts), t the total acquisition time (s) and Q the sample flow rate (mL/ms), which can, for example, be estimated from the mass change of an arbitrary volume of water consumed by the instrument as a function of time.

Determining the sample flow rate is a calibration step for any instrument and may vary based on, for example, the peristaltic pump used, tube inner diameter, tube elasticity, humidity etc. It is, therefore, recommended to remeasure the sample flow rate when starting a SP-ICP-MS experiment or activity. Time-averaged measurements of, for example, 300 secs suffice.

When a dispersion of known number concentration is introduced to the ICP-MS instrument, the particle concentration observed may be lower than the actual concentration (for example, <10%). This is due to losses associated with the production of the aerosol and ion beam and its transport through the ion optics finally arriving at the mass spectrometer MS, which is instrument dependent.[21]

To account or correct for these losses, a dimensionless quantity can be introduced known as the transport efficiency ($\eta_t$) or the fraction of particles originally introduced that can actually be detected. Since the $\eta_t$ is size dependent, sets of known particle size and concentration are introduced and their N determined (Figure 3C). Calibration can then be performed using Eq. 2:

$$N_{obs} = \eta_t N_{Theo}$$

in which $N_{obs}$ is the observed number concentration and $N_{Theo}$ the theoretical particle concentration. The slope of Figure 3C can be used to provide values of $\eta_t$ for other particle sizes via interpolation.

Often used calibrants are, for example, monodisperse isotropic Ag and Au nanoparticles, which can be purchased from various sources (see below and Figures 9 and 10). The inventors have used Au NPs as calibrants in the present work. Alternatively, for inductively-coupled plasma mass spectrometer equipped with a microdroplet generator, the transport efficiency ($\eta_t$) can directly be inferred from the droplet calibrants without the use of NP standards.[23]

With the instrument calibrated and the transport efficiency $\eta_t$ obtained, one could directly measure the number concentration of any sample dispersion.

However, in order to determine the mass of the particles counted, another calibration is carried out. As mentioned before, in ICP-MS, the dissolved metal concentration of an unknown solution is determined by comparing the average intensity measured to the intensity of solutions of known concentrations. Similarly, in SP-ICP-MS, unknown particle mass is determined via a calibration curve based on dissolved standards (Figure 4). In here, dissolved solutions, for example, dissolved metal solutions of known concentrations are prepared, introduced to the ICP-MS instrument and their respective average intensities obtained as a function of time (Figure 4A-B). Plotting the average intensity versus the concentration of the dissolved standard reveals the linear relation between the ion intensity and dissolved concentration (Figure 4C). Of course, in SP-ICP-MS, the intensities are not time averaged and instead measured at discrete intervals (or dwells). Therefore, the calibration curve (abscissa is $\mu$g/mL; Figure 4C) is to be converted to the amount of material detected per dwell ($\mu$g/interval; Figure 4D). This can be achieved according to Eq. 3:

$$\Delta m = \eta_t t_d Q C$$

in which $\eta_t$ is the transport efficiency needed to correct for ion losses in the ion optics (dimensionless), $t_d$ is the dwell time (or acquisition interval time, [$\mu$s]), Q the flow rate (mL/min) and C the dissolved ion concentration ($\mu$g/mL).

Mass flux calibration data relating a value of the intensity $I_p$ measurement or data of the inductively-coupled plasma mass spectrometer to a mass of material detected per acquisition interval or dwell time is provided or received (S2) by the method of the present disclosure.

The slope $a$ of the converted calibration curve then relates the intensity of the ion plume to the particle mass $m_p$ through Eq. 4:

$$m_p = \frac{I_p}{am_f \eta_i}$$

in which $\eta_i$ is the ionization efficiency, the dimensionless parameters that allows for a correction factor for materials that ionize poorly.

Partial ionization is strongly mass dependent both relative and absolute, and has been determined for Au to occur for particles >150 nm.[24,13] Further, partial ionization may also play a role for metal oxides for their generally high boiling points.[24,13]

For the class of materials investigated in the present disclosure, however, this parameter $\eta_i$ equals to 1.

And $m_f$ and is purely introduced for modelling purposes. For example, only metal species in metal oxide analytes' can be observed and with the parameter $m_f$ this can be corrected for (the multitude of possible oxygen sources other than the analyte make quantification with ICP-MS impossible). The mass fraction $m_f$ may thus also be equal to 1 and depends on the material being analyzed.

With the particle mass $m_p$ in hand (S3) (Eq. 4) using the mass flux calibration data (S2), the counts per intensity histogram of the analyte can be converted into a size-distribution (S5).

In the first step, the particle mass $m_p$ is converted to a particle volume $V_p$ (S4) using the density $\rho$ as follows (Eq. 5):

$$\frac{m_p}{\rho} = V_p$$

The density $\rho$ being a known density value or a presumed density value of the particle or analyte.

Then, depending on the specific geometry a particle ensemble consists of, for example spherical, cubic, truncated octahedral or tetrahedral geometry or shape, the volume $V_p$ can be converted into a geometrical descriptor, such as the edge length (el). For particles of spherical shape, the edge length is given, for example, by Eq. 6 and is equivalent to the diameter:

$$el_{Sph} = \left(\frac{6V_p}{\pi}\right)^{1/3}.$$

For particles of cubic shape, the edge length or center-to-center distance of two adjacent corner atoms is, for example, simply the cube root of the volume $V_p$ (Eq. 7):

$$el_{Cu} = \left(V_p\right)^{1/3}.$$

For particles of cuboctahedral shape, the volume is given by a cube, which is truncated by eight equal tetrahedrons. For a regular cuboctahedron, the edge length is given, for example, by (Eq. 8):

$$el_{CuOh} = \left(\frac{3V_p}{5\sqrt{2}}\right)^{1/3}.$$

For particles of octahedral shape, the volume is given by two joined pyramids. For a regular octahedron, the edge length is given, for example, by (Eq. 9):

$$el_{Oh} = \left(\frac{3V_p}{\sqrt{3}}\right)^{1/3}.$$

For particles of truncated octahedral shape, the volume is given by two joined pyramids (similar to the regular octahedron), which are truncated by six equal pyramids. For a regular truncated octahedron, the edge length is given, for example, by (Eq. 10):

$$el_{TOh} = \left(\frac{V_p}{8\sqrt{2}}\right)^{1/3}.$$

For particle of tetrahedral shape, the volume is, for example, obtained from four joined, equal-sided triangles with the edge length given, for example, by (Eq. 11):

$$el_{Th} = \left(6\sqrt{2}V_p\right)^{1/3}.$$

Finally, for particles of rhombic dodecahedral shape, the volume is given by a cube joined with six equal pyramids. For a regular rhombic dodecahedron, the edge length is given, for example, by (Eq. 12):

$$el_{RDh} = \left(\frac{9V_p}{16\sqrt{3}}\right)^{1/3}.$$

The geometrical descriptor, for example, the edge length (el) is determined on the basis of a presumed, measured or predetermined particle geometry or shape of the particle or analyte. The particle geometry or shape can, for example, be determined using electron microscopy.

A particle volume $V_p$ of the detected particles is determined or calculated (S4) according to the present method using the determined particle mass $m_p$.

The determined geometrical descriptor, for example, the edge length (el) then allows to determine the particle size distribution (Figure 3G, Figure 1, B1, B2, B3) using the determined particle volume $V_p$, providing a particle count as a function of the determined geometrical descriptor (for example, the edge length (el)). A particle size of the particles detected is thus determined or calculated (S5) using the determined particle volume $V_p$ of the particles detected and the determined or attributed geometry or shape of the detected particles.

The particle size of the particles detected can thus be determined using a geometrical descriptor associated with the determined geometry or shape of the detected particles. The determined geometry or shape of the detected particles is, for example, a predetermined geometry or shape. The determined geometry or shape of the detected particles is predetermined using, for example, electron microscopy.

The geometrical descriptor comprises or consists of, for example, a particle edge-length el where the particle edge-length el is, for example, defined as a center-to-center distance between two adjacent corner atoms of a particle.

The particle size of the particles detected can be determined by determining a particle edge-length (el) of the particles detected using the determined particle volume $V_p$ of the particles detected and the determined or attributed geometry or shape of the detected particles. As mentioned previously, the determined or attributed geometry or shape of the detected particles can be, for example, spherical, cubic, cube octahedral, octahedral, truncated octahedral, tetrahedral, or rhombic dodecahedral.

As mentioned previously, the particle volume $V_p$ of the detected particles is determined using the determined particle mass $m_p$ and a density value $\rho$ of the detected particles. The density value $\rho$ of the detected particles is, for example, a predetermined density value $p$.

As indicated previously, the particle mass $m_p$ of the particles detected can, for example, be calculated using a slope value a determined from the mass flux calibration data or the at least one mass flux calibration curve data. The particle mass $m_p$ of the particles detected can be determined or calculated using the previously mentioned Equation 4,

$$m_p = \frac{I_p}{a m_f \eta_i}$$

wherein a is a slope value determined from the mass flux calibration data or the at least one mass flux calibration curve data, $\eta_i$ is an ionization efficiency correction factor having a positive value between 0 and 1, and $m_f$ is a mass fraction factor having a positive value between 0 and 1.

Also, as indicated previously, the mass flux calibration data or the at least one mass flux calibration curve data can, for example, be determined by converting dissolved metal calibration data or at least one dissolved metal calibration curve relating a measured intensity to concentration using the equation:

$$\Delta m = \eta_t t_d QC$$

in which $\eta_t$ is a transport efficiency factor correcting for ion losses in the inductively-coupled plasma mass spectrometer, $t_d$ is a dwell time or acquisition interval time, $Q$ a sample flow rate of the inductively-coupled plasma mass spectrometer and C a dissolved ion concentration.

The detected particles comprise or consist of, for example, at least one or a plurality of inorganic elements. The constituent material of the detected particles may, for example, be predetermined or known. The density value $\rho$ of the detected particles may, for example, be predetermined or known. The geometry or shape of the detected particles may, for example, be predetermined or known.

The particles to be sized and counted are, for example, nanoparticles.

An inductively-coupled plasma mass spectrometer configured to carry out single-particle inductively coupled plasma mass-spectrometry, or an inductively-coupled plasma mass spectrometer equipped with a microdroplet generator is, for example, provided and used as part of the method. The inductively-coupled plasma mass spectrometer can be, for example, a quadrupole, time-of-flight or a sector-field based instrument.

The method may additionally include determining or calculating a particle atomicity $A_p$ or a number of atoms $A_p$ in the particle of the detected particles using, for example, the determined particle mass $m_p$. The particle atomicity $A_p$ of the detected particles is determined using the determined particle mass $m_p$ and an atomic mass value of the detected particles. The atomic mass value of the detected particles is, for example, a predetermined atomic mass value. Additionally, a particle composition distribution can, for example, be determined or calculated using the determined atomicity $A_p$ of the detected particles. The particle composition distribution is used, for example, used to determine the particle structure such as core-shell, homogeneously mixed and or heterostructure.

According to a further aspect of the present disclosure, the method is, for example, a computer implemented method for single-particle inductively-coupled plasma mass spectrometry particle sizing and counting.

A further aspect of the present disclosure concerns a system according to claim 14 including a processor and a memory including a computer program comprising instructions which, when the computer program is executed by the processor, cause the system to carry out the method of claim 1, the method comprising the steps of:

- receiving (S1) an intensity (Ip)-versus-counts (Cts) histogram of particles detected by an inductively-coupled plasma mass spectrometer (ICP-MS), the intensity (Ip ) representing particle detection and the count (Cts) representing particle detection frequency,
- receiving (S2) mass flux calibration data relating a value of the intensity (Ip) measurement or data of the inductively-coupled plasma mass spectrometer to a mass of material detected per acquisition interval or dwell time,
- determining (S3) a particle mass (mp) of the particles detected using the mass flux calibration data,
- determining (S4) a particle volume (Vp) of the detected particles using the determined particle mass (mp), and
- determining (S5) a particle size of the particles detected using the determined particle volume (Vp) of the particles detected and a determined or attributed geometry or shape of the detected particles; characterized in that the intensity (Ip)-versus-counts (Cts) histogram of particles detected by the inductively-coupled plasma mass spectrometer (ICP-MS) is determined using obtained, per acquisition interval or dwell time, intensity (Ip) measurements obtained by the inductively-coupled plasma mass spectrometer, the obtaining having been repeated over a total time duration to obtain a plurality of said intensity (Ip) measurements per acquisition interval or dwell time, and wherein the intensity (Ip)-versus-counts (Cts) histogram is determined by relating (i) each intensity (Ip) measurement of the plurality of said intensity (Ip) measurements per acquisition interval or dwell time to (ii) the number of times that intensity (Ip) measurement has been obtained, wherein the intensity (Ip) measurement of the histogram relates to a detected particle, and the counts relates to the number of times that particle has been detected.

The system or apparatus includes, for example, at least one processor or calculation means; and at least one memory or storage means including a computer program comprising instructions which, when the computer program is executed by the processor or calculation means, cause the system or apparatus to carry out the method for single-particle inductively-coupled plasma mass spectrometry particle sizing and counting.

The system or apparatus includes, for example, any one of the inductively-coupled plasma mass spectrometers mentioned in the present disclosure.

A further aspect of the present disclosure concerns a computer program according to claim 15 comprising instructions which, when the program is executed by a computer, cause the computer to carry out the method for single-particle inductively-coupled plasma mass spectrometry particle sizing and counting according to claim 1, the method comprising the steps of:

- receiving (S1) an intensity (Ip)-versus-counts (Cts) histogram of particles detected by an inductively-coupled plasma mass spectrometer (ICP-MS), the intensity (Ip) representing particle detection and the count (Cts) representing particle detection frequency,

- receiving (S2) mass flux calibration data relating a value of the intensity (Ip) measurement or data of the inductively-coupled plasma mass spectrometer to a mass of material detected per acquisition interval or dwell time,
- determining (S3) a particle mass (mp) of the particles detected using the mass flux calibration data,-determining (S4) a particle volume (Vp) of the detected particles using the determined particle mass (mp), and
- determining (S5) a particle size of the particles detected using the determined particle volume (Vp) of the particles detected and a determined or attributed geometry or shape of the detected particles;

characterized in that the intensity (Ip)-versus-counts (Cts) histogram of particles detected by the inductively-coupled plasma mass spectrometer (ICP-MS) is determined using obtained, per acquisition interval or dwell time, intensity (Ip) measurements obtained by the inductively-coupled plasma mass spectrometer, the obtaining having been repeated over a total time duration to obtain a plurality of said intensity (Ip) measurements per acquisition interval or dwell time, and wherein the intensity (Ip)-versus-counts (Cts) histogram is determined by relating (i) each intensity (Ip) measurement of the plurality of said intensity (Ip) measurements per acquisition interval or dwell time to (ii) the number of times that intensity (Ip) measurement has been obtained, wherein the intensity (Ip) measurement of the histogram relates to a detected particle, and the counts relates to the number of times that particle has been detected.

Yet a further aspect of the present disclosure concerns a computer-readable data carrier having stored thereon, the computer program.

Figure 5 shows an exemplary sample preparation and solvent transfer via surfactant stripping using triethyl oxonium hexafluorophosphate.

For colloidal nanoparticles and or nanocrystals that are dispersible in aqueous solutions,[25,26,27] dilutions can be prepared directly from the stock dispersions. However, many colloidal nanocrystals and or nanoparticles are prepared in non-polar organic solvents.[28,5,29,30,31] Therefore, solvent transfer can be performed in order to make the dispersions compatible with the aqueous environment of ICP-MS.[32,33] Often, however, colloidal nanoparticles and nanocrystals are synthesized using surfactants that contain non-polar groups to obtain stable dispersions or facilitate shape-control.[28,5,29,30,31] Due to the miscibility gap between the apolar features of common capping agents such as primary amines, fatty acids, phosphines, and aliphatic thiols and the polar medium, surfactant stripping must be performed prior to solvent transfer.[32] Depending on the material considered i.e. metals, metal oxides and or semiconductors, various protocols have been developed.[34,35,36,37] One facile and relatively gentile approach is to use Meerwein's reagent $Et_3O^+$ to alkylate native surfactants, replacing them by an inorganic counter ion i.e. hexafluorophosphate and or solvent.[38] For easily oxidizable metals such as Cu (standard reduction potential: +0.3 V), a more soft electrophile is needed to prevent etching and retain the particles mass and shape.

Therefore, a sample or dilution preparation step according to the method of the present disclosure comprises, for example, using an alkylating agent or weak alkylating agent to carry out surfactant stripping on a plurality of particles to be sized and counted, to remove native surfactants and replace the native surfactants with at least one inorganic counter ion. Washing can be carried out after introduction of the alkylating agent or weak alkylating agent. The alkylating agent or weak alkylating agent may, for example, comprise or consist of a triethyl oxonium salt. The alkylating agent or weak alkylating agent may, for example, comprise or consist of triethyl oxonium hexafluorophosphate or triethyl oxonium tetrafluoroborate.

The plurality of particles has been, for example, prepared or synthesized in non-polar organic solvents.

A concentration of the alkylating agent or the weak alkylating agent is, for example, determined to carry out surfactant stripping without etching or minimally etching a surface of the particles.

The particles stabilized with an inorganic counter ion are, for example, dispersed in a polar solvent. An aqueous dispersion is, for example, prepared and provided to the inductively-coupled plasma mass spectrometer to carry out intensity $I_p$ measurements representing particle detection as a function of time.

The inventors have used, for example, triethyl oxonium hexafluorophosphate, a relatively weak alkylating agent, to perform the surfactant stripping (Figure 5A). By carefully adjusting the $Et_3OPF_6$ concentration, surfactant stripping can be achieved without damaging the nanocrystal surface (Figure 5C: native surfactant capped and 5E: $PF_6^-$ capped nanocrystals). If the trialkyl oxonium salt concentration is too high, or if washing is not performed immediately after introduction of the alkylating agent, etching of the nanocrystal surface occurs, effectively shifting the obtained distribution to lower values (Figure 5D). Contrarily, if too little of the Meerwein's salt is used, native surfactants remain at the particle surface resulting in the formation of aggregates after solvent transfer derailing the interpretation of the final distributions. Generally, for dispersions with a metal concentration of 1-20 mg/mL and a diameter between 20-200 nm, a solution of 13 mM $Et_3OPF_6$ in a 1:1 volumetric ratio suffices. A more detailed description of the surfactant stripping and solvent transfer is provided below.

Dilutions can now be prepared. With the nanocrystals and or nanoparticles stabilized with an inorganic counter ion, dispersing in polar solvents such as DMF, EtOH, MeOH and acetone, is now possible. It is pointed out that for easily oxidizable materials such as Cu, Zn, etc. usage of dry solvents is advised as ionization efficiencies may vary between the metals and their respective metal oxides, which could affect the measurement.[14] The final aqueous dilutions can be prepared by introducing the required amount of the anhydrous polar dispersions directly to the water phase at the start of the measurement. Preferably, one aims for a nanoparticle concentration between 10,000 and 100,000 particles per mL as estimated based on TEM particle counting coupled with ICP-OES (optical emission spectroscopy) or ICP-MS. The reason to keep the concentration range narrow will come apparent below. Lastly, for the instability of certain metals in water, fresh dilutions are preferably prepared for each individual measurement.

In order to have the most accurate measurement, it is adamant that each particle event can be distinguished from the next. If multiple particles or, rather, their ion plumes, arrive in the mass filter with too short a time interval to be resolved, their summed mass will be recorded instead and assigned by the algorithm to a single particle event . Therefore, when the concentration of particles in the sample dispersion is too high, the average size shift to higher values. Consider the size-distributions in Figure 6. In here, dilutions of the 15 nm TOh NPs of $10^5$, $1/3 \cdot 10^5$ and $1/6 \cdot 10^5$ were prepared estimated from ICP-MS and TEM micrograph analysis. The measured most frequent size was: 32 nm (Figure 6A, Table 2), 18 nm (Figure 6B) and 15 nm (Figure 6C), respectively. For the first and second dilution, an 8- and 4-fold larger mass was recorded in comparison to obtained via TEM and measured for the last dilution (Figure 1, Figure 6C). This shows the particle concentration cap. Beyond it; multiple particle events cannot be excluded. Diluting further, on other hand, will result in progressively lower numbers of counts as not all intervals will contain a particle event. Of course, this could be off-set by extending the measurement time but this is rather impractical: for every additional second measured, with $t_d$=50$\mu$s, $2 \cdot 10^4$ data points are added to the data file. Therefore, a sweet spot exists where the concentration yields good statistics with the least amount of data but excludes multiple particle events. For the Cu NPs reported and using the instrument settings as outlined further below, this lies between 10,000-20,000 NPs/mL. However, this value can vary strongly between particles of different elements and depends on both the chemical nature of the NP, its size and the instrument and instrument settings used (i.e. Au 30-100nm ~50,000 NPs/mL for $t_d$=50$\mu$s).[39,40] Preparing dilution series as in Figure 6 can be of tremendous value to calibrate a measurement when sweet spot number concentrations are unknown. Note the difference in counts between Figure 6A/6B and 6C. When multiple particle events occur, ion signals that could be resolved, are not and as such low counts follow. Then, when the single particle per event condition is met, the total number of counts goes up by at least an order. This can be used as a handle to solve any particle concentration problem. Finally, multiple particle events can also be reduced by adjusting the pump speed. However, smaller flow rates will extend measurement times, which is a limiting factor.

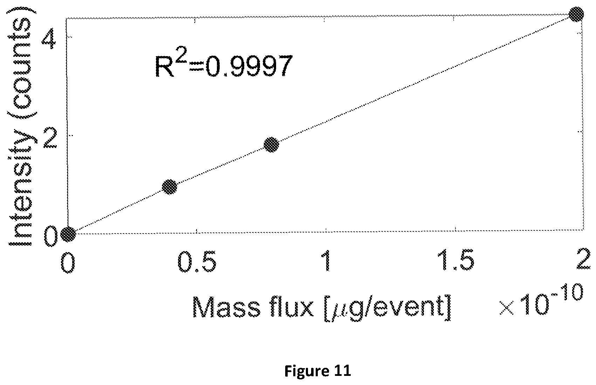

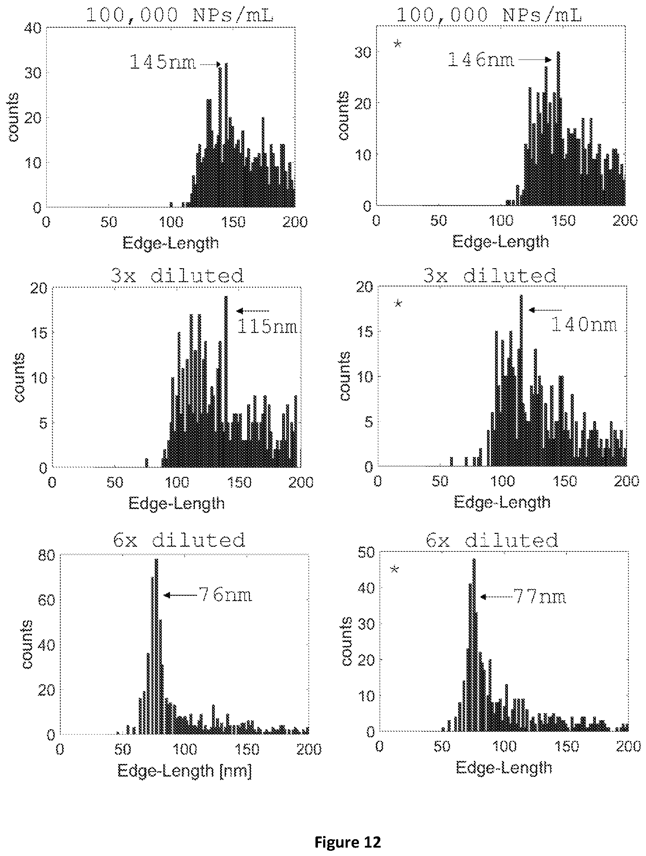

To determine the reliability of the technique to produce reproducible size-distributions (it still being one of the main means to show ensemble (in)homogeneity),[5,6] the inventors prepared two dilution series of the same particle (TOh, Figures 6A-C and Figure 6AA-CC) but used independent internal standards for the instrument calibration of $\eta_t$ (Figure 9 and 10). By using the same mass/interval calibration curve for both dilution series (Figure 11), the inventors ensured that any changes to the size distribution originated from inaccuracy in the determination of the $\eta_t$, which is expected to introduce the largest error.[14] When the particle concentration hits the sweet spot, a perfect match in the particle mass is obtained with the edge-length of the TOh determined at 15 nm in both cases, independently of calibrant used (Figure 6C and 6CC). With a well-calibrated instrument, precise and accurate size-distributions can be obtained reproducibly. This is independent of particle size and shape (for particles above the limit of detection)[41] as equally agreeing results could be obtained for the Th (Figure 11 and 12).

The inventors further investigated the accuracy and precision of SP-ICP-MS to determine number concentrations as they are of interest to study colloidal stability, nanoparticle sintering and catalytically active surface area estimation, amongst others.[42,43,44] The inventors prepared 6 independent dilutions of Th, C and TOh, based on a four-fold dilution series, and measured the particle concentrations (Table 1). With an uncertainty of the measurement of only 3.7% (estimated through error propagation of the dilution series based on manufacturer reported uncertainties at 3.5%), SP-ICP-MS allows for number concentration determinations with high precision. Further, it reveals a consistently lower particle concentration (~10%) than estimated based on TEM particle counting. This can both be explained through aggregates in the sample and poor statistics of TEM micrograph analysis (only a 100 counts). Finally, the inventors would like to stress using well-calibrated micropipettes when number concentrations are the sought-after quantity (Table 1). Poorly calibrated pipettes easily introduce measurement uncertainties >20% surpassing the error introduced by the meagre statistics and bias of particle counting.

Table 1. Theoretical (based on TEM micrograph analysis) and mean particle concentration of 6 independent measurements obtained from a dilution series using two sets of micropipettes: 1) certified calibration and 2) uncalibrated. Coefficient of variation (CV) =$\sigma/\mu$=0.037 and 0.26, respectively.

| Theoretical particle conc. [NPs/mL] | Measured particle conc. Calibrated micropipette [NPs/mL] | Measured particle conc. Uncalibrated micropipette [NPs/mL] |
|---|---|---|
| 16,667 | 14,995 $\pm$ 556 | 15,027 $\pm$ 3964 |

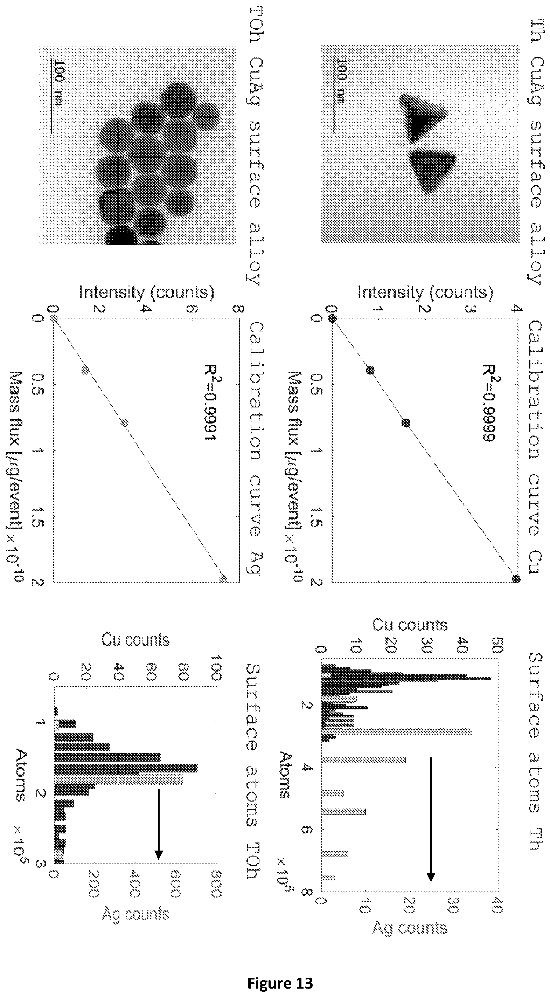

Another application of SP-ICP-MS is to quantify different elements within a particle ensemble.[45] Due to the short dwell times needed for SP-ICP-MS, time-of-flight mass analyzers are required to obtain a full elemental spectrum in a single sweep.[46,47,48,13] The quadrupole used presently (see below), however, does allow for sequential spectral analysis.[13] Using a galvanic exchange reaction, the inventors have synthesized anisotropic CuAg surface alloy's for electrocatalytic purposes,[11] which will be the subject of a later work (Figure 7A1, A2 and Figure 13). Obtaining the ensemble Ag and Cu distribution with SP-ICP-MS (Figure 7B1, B2), followed by a subsequent subsurface based modelling step (Figure 14), the inventors were able to determine the ensemble average surface composition of the anisotropic particles (Figure 7C1, C2). The inventors deduce that the ensemble average surface alloy contains 0.52 ML of Ag. Further, the inventors stress that this method allows to distinguish a core-shell particle from homogeneous mixtures as the correlation between the atoms of the outermost Cu layer and the total amount of Ag atoms can only exist if the Ag is at the surface. For a homogeneous mixture or any other heterostructure than core-shell, the total Ag content is independent of the surface.

While sequential analysis suffices for simple bimetallic samples, experiment and data treatment quickly becomes tedious for more complex systems. Further, data treatment requires assumptions and preexisting knowledge of the sample, e.g., that each particle contains all elements. Therefore, the inventors extended upon their galvanic replacement reaction to produce next to C-CuAg NSAs, C-CuPd and C-CuPdAg anisotropic multimetallic NPs to show the capabilities of TOF mass analyzers to determine the elemental make-up of every *single* particle simultaneously and its advantage over quadrupole mass analyzers for, e.g., doping studies (Figure 8). The inventors confirmed the normal distribution of Ag in the C-CuAg NSA (Figure 8C1) and determined that in the case of CuPd, a positive skew ensured with an order larger Pd content (Figure 8C2). The inventors could verify the presence of Ag and Pd in the respective bimetallic systems using scanning transmission electron microscopy energy dispersive X-ray spectroscopy (STEM-EDX), which showed a core-shell like morphology for C-CuPd NPs, corroborating the higher average Pd content determined with SP-ICP-TOFMS (Figure 8B1-B2). Moreover, by reintroducing C-CuAg NSAs in the Pd-precursor reaction mixture, the inventors were able to synthesize C-CuPdAg NPs as well (Figure 8A3-C3).

Additional experimental details are now provided.

## Chemicals

The following chemicals and solvents were acquired from Sigma-Aldrich: copper acetylacetonate 99.99% (Cu(acac)$_2$), palladium chloride 99% (PdCl$_2$), copper bromide 99.99% (CuBr), nitric acid 70% (HNO$_3$), trioctylphosphine oxide 99% (TOPO), trioctylphsopshine 99% (TOP), oleyl amine 70% (OLAM), oleic acid 90% (OLAC), dichloromethane (DCM), dimethyl formamide. Anhydrous ethanol 95% was purchased from ACROS organics (EtOH) and anhydrous toluene (99.8%) and triethyl oxonium tetrafluoroborate 1.0 M in DCM from Alfa Asear. Lastly, silver nitrate 99.9995% was obtained from Puratrem (AgNO$_3$). All chemicals were used as received without any further purification. All solvents, were used as is, except for DCM, which was distilled at 40 °C in inert atmosphere to dry it. All aqueous solutions were prepared with di-ionized (DI) water with a resistivity of 18.2 M$\Omega$•cm.

## Synthesis anisotropic copper crystals

All three Cu nanocrystal morphologies were synthesized using a reflux set-up under inert conditions. For the Cu-C, 0.45904 g CuBr and 1.78 mL TOP stored in a glove box, were mixed with 9 mL of degassed OLAM and sonicated for 10 min to form a transparent, pale yellow solution. Meanwhile, 50 mL of OLAM (70%) was added to a 250 mL three-necked flask and degassed under vacuum. The flask was purged with N$_2$ after the bubble formation has stopped. Using a clean syringe, the reaction mixture was then quickly added to the flask. The mixture was heated to 80 °C using a heating mantle and kept at that temperature for 30 min, whilst applying low-vacuum, to dry the solution. The yellow transparent reaction mixture was purged with N$_2$ and the temperature quickly increased to 270 °C and kept for 1 hour. At 270 °C, the reaction mixture turned red indicating nucleation. After the solution had cooled to rt, the reaction mixture was transferred to the glove box and washed with toluene using centrifugation (7,500 rpm for 5 min). The Cu-C pellet was redispersed in 5 mL of toluene. For Cu-TOh, the reaction was carried out at 260 °C instead, all other conditions were kept the same. For the Cu-Th, 0.23908 g CuBr and 3.12417 g dry TOPO were dissolved in 5 mL degassed OLAM using ultrasonication (10 min), yielding a pale, yellow translucent solution. This was then quickly added to 34 mL OLAM in a three-necked flask under inert atmosphere using a syringe. Then, the temperature was raised to 80 °C under vacuum, kept for 30 min, and raised further to 180 °C, inducing a boil. The pale, yellow solution turned a deep gold. At this point, a $N_2$ purge was applied and the temperature further raised to 260 °C upon which the solution turned translucent black indicating nucleation. The reaction was continued for 1h yielding a purple dispersion, which was likewise washed using toluene.

**Silver, palladium coating: surface alloy**

4 mg of NPs dispersed in toluene were added to a 10 mL glass vial to which 3.5 mL of degassed OLAM were carefully added, without disturbing the NP film. Additionally, 0.5 mg of dry $AgNO_3$ or $PdCl_2$ were added to 1.5 mL of degassed OLAM and heated at 50 or 80 °C using an oil bath until dissolved. $AgNO_3$ or $PdCl_2$ in OLAM was then carefully added to the reaction vial, which was then allowed to react at 80 °C for 60 s with C-Cu and TOh-Cu, or 50 °C for 300 s with Th-Cu, after which the reaction was quenched with toluene. This yielded the Th- and TOh-CuAg and C-CuAg/Pd. For the synthesis of C-CuPdAg, 4 mg of C-CuAg rather than C-Cu NPs were used instead. All other parameters were kept the same. The coated crystals were washed with toluene and stored in a glovebox.

**Aqueous** dispersion preparation

100 $\mu$L of the (bi)metallic (an)isotropic nanoparticle dispersions in the concentration range of 2-20 mg/mL were added to 100 $\mu$L of a 13 mM $Et_3OPF_6$ in DCM and sonicated. The samples were then washed with DMF (1 mL, 5000 rpm and 2 min) in three-fold and dispersed in 100 $\mu$L DMF. An aliquot equivalent of 100,000 NPs/mL over a 3-step dilution series was added to deionized water, which was used for sampling.

Characterization

*Electron microscopy.* Transmission electron microscopy (TEM) images and selected-area electron diffraction (SAED) patterns were acquired with a FEI Tecnai Basic Spirit operated at 120 kV in bright field mode. The microscope was equipped with a Gatan charge-coupled device (CCD) camera and Digital Micrograph for imaging. Samples were drop-casted on 400 mesh carbon film copper grids from Ted Pella Inc., which were washed with ethanol before and after drop-casting. Size distributions were obtained through edge-length analysis using the FIJI ImageJ software package of at least 100 unique particles.
*Inductively-coupled plasma - optical emission spectroscopy (ICP-OES).* The concentration of the NP solution was determined with an Agilent 5110 ICP-OES with a VistaChip II CCD camera. The NPs were digested overnight in 2% $HNO_3$ and filtered with 400 $\mu$m pore size Ultrapore filters. The calibration curves were obtained through the preparation of a dilution series of elemental standards obtained from Sigma Aldrich.
*Inductively-coupled plasma mass spectrometry (ICP-MS).* Particle sizing and counting was achieved with a NexION 350D ICP-MS instrument from PerkinElmer operated in continuous data acquisition mode. A RF power of 1600 W was used to generate the plasma, with the auxiliary gas and nebulizer gas flow kept at 1.2 mL min$^{-1}$ and 1.12 mL min$^{-1}$, respectively. The frequency of rotation of the pump was kept at 40 rpm. The flow rate changed from day to day ranging from 0.6 to 0.8 mL/min. The dwell time was kept at 50 $\mu$s for all measurements. Spectra obtained for 100s in all cases. Calibration of the transport efficiency ($\eta_t$) was achieved with standard Au NPs of 61, 78 and 98 nm purchased from NanoComposix and 30, 50 and 80 nm purchased from PerkinElmer at number concentration of ~50,000 NPs/mL (Figure 9 and 10). After Au NPs standard introduction, the instrument was rinsed with 2% HCl for 30s and 2% $HNO_3$ after Cu(Ag) NP sampling. Before introduction of a sample, equipment was rinsed with DI water. Dissolved metal calibration curves were obtained from elemental standards purchased from Sigma Aldrich.

**Table 2.** TOh dilution series sample parameters.

| Toh | NP/mL | Most frequent | Mean | Diss. Conc. | TE (%) | Rsquared |
|---|---|---|---|---|---|---|
| Stock | 100000 | 23 | 42 | 3.13 | 3.46 | 0.999719148 |
| 3x | 33333.33333 | 18 | 31 | 0.94 | 3.46 | 0.999719148 |
| 6x | 16666.66667 | 15 | 19 | 0.35 | 3.46 | 0.999719148 |
| | | | | | | |
| Toh_2 | NP/mL | Most frequent | mean | Diss. Conc. | TE (%) | Rsquared |
| Stock | 100000 | 29 | 42 | 3.1 | 4.11 | 0.999719148 |

(continued)

| Toh_2 | NP/mL | Most frequent | mean | Diss. Conc. | TE (%) | Rsquared |
|---|---|---|---|---|---|---|
| 3x | 33333.33333 | 23 | 32 | 0.9 | 4.11 | 0.999719148 |
| 6x | 16666.66667 | 15 | 16 | 0.31 | 4.11 | 0.999719148 |

**Geometrical model: cube, tetrahedra, truncated octahedra.**

*Geometrical model of the cube.*

The inventors first defined the particles mass, which for a cube is given by:

$$m_{cube} = \rho \cdot l_{edge-legth}{}^3$$

With $\rho$ the density of the bulk and $l_{edge-length}$ the particle edge-length. With this, one can calculate the total number of atoms based on the volume and the volume of the unit cell:

$$Atoms_{volume} = \frac{l_{edge-legth}{}^3 \cdot n_{atoms}}{l_{unit\ cell}{}^3}$$

With $n_{atoms}$ the number of atoms in the unit cell and $l_{unit\ cell}$ the lattice constant (FCC).

To determine the number of surface atoms, the inventors first defined a subsurface, which comprises the $V_{cube}$ but with one monolayer of atoms subtracted (see Figure 14 for a spherical representative schematic):

$$V_{subsurface} = (l_{edge-legth} - 4r_{covalent})^3$$

in which $r_{covalent}$ is the metal-metal bond length. In here the constraint is applied that $l_{edge-legth}$ - $4r_{covalent}$ > 0 and that only a complete monolayer can be removed at a time. The number of surface atoms then becomes:

$$Atoms_{surface} = \frac{(V_{Cube} - V_{subsurface}) \cdot n_{atoms}}{l_{unit\ cell}{}^3}$$

With

$$Atoms_{bulk} = Atoms_{volume} - Atoms_{surface} = Atoms_{subsurface}$$

*Geometrical model of the Tetrahedra.*

The geometrical model of the Tetrahedra was derived following the same logic as for the cube. Therefore, we will only list the changes respective of the geometry.

$$Atoms_{volume} = \frac{6\sqrt{2} \cdot l_{edge-legth}{}^3 \cdot n_{atoms}}{3 \cdot l_{unit\ cell}{}^3}$$

and

$$Atoms_{subsurface} = \frac{6\sqrt{2}(l_{edge-legth} - 6r_{covalent})^3 \cdot n_{atoms}}{3 \cdot l_{unit\ cell}{}^3}$$

*Geometrical model of the Truncated Octahedra.*

The geometrical model of the truncated octahedra was derived following the same logic as for the cube. We will, therefore, only list the changes respective of the geometry.

$$Atoms_{volume} = \frac{8\sqrt{2} \cdot l_{edge-legth}{}^3 \cdot n_{atoms}}{l_{unit\ cell}{}^3}$$

and

$$Atoms_{subsurface} = \frac{8\sqrt{2}(l_{edge-legth} - 2r_{covalent})^3 \cdot n_{atoms}}{l_{unit\ cell}{}^3}$$

Implementations described herein are not intended to limit the scope of the present disclosure but are just provided to illustrate possible realizations.

While the invention has been disclosed with reference to certain preferred embodiments, numerous modifications, alterations, and changes to the described embodiments, and equivalents thereof, are possible without departing from the scope of the invention. Accordingly, it is intended that the invention not be limited to the described embodiments and be given the broadest reasonable interpretation in accordance with the language of the appended claims.

**References**

(1) Jones, M. R.; Osberg, K. D.; Macfarlane, R. J.; Langille, M. R.; Mirkin, C. A. Templated Techniques for the Synthesis and Assembly of Plasmonic Nanostructures. Chem. Rev. 2011, 111 (6), 3736-3827. https://doi.org/10.1021/cr1004452.

(2) Xia, Y.; Xiong, Y.; Lim, B.; Skrabalak, S. E. Shape-Controlled Synthesis of Metal Nanocrystals: Simple Chemistry Meets Complex Physics? Angew. Chem. Int. Ed. 2009, 48(1), 60-103. https://doi.org/10.1002/anie. 200802248.

(3) Liu, L.; Corma, A. Metal Catalysts for Heterogeneous Catalysis: From Single Atoms to Nanoclusters and Nanoparticles. Chem. Rev. 2018, 118 (10), 4981-5079. https://doi.org/10.1021/acs.chemrev.7b00776.

(4) Kleijn, S. E. F.; Lai, S. C. S.; Koper, M. T. M.; Unwin, P. R. Electrochemistry of Nanoparticles. Angew. Chem. Int. Ed. 2014, 53 (14), 3558-3586. https://doi.org/10.1002/anie.201306828.

(5) Chen, C.; Kang, Y.; Huo, Z.; Zhu, Z.; Huang, W.; Xin, H. L.; Snyder, J. D.; Li, D.; Herron, J. A.; Mavrikakis, M.; Chi, M.; More, K. L.; Li, Y.; Markovic, N. M.; Somorjai, G. A.; Yang, P.; Stamenkovic, V. R. Highly Crystalline Multimetallic Nanoframes with Three-Dimensional Electrocatalytic Surfaces. Science 2014, 343 (6177), 1339-1343. https://doi.org/10.1126/science. 1249061.

(6) Choukroun, D.; Pacquets, L.; Li, C.; Hoekx, S.; Amouts, S.; Baert, K.; Hauffman, T.; Bals, S.; Breugelmans, T. Mapping Composition-Selectivity Relationships of Supported Sub-10 Nm Cu-Ag Nanocrystals for High-Rate CO2 Electroreduction. ACS Nano 2021. https://doi.org/10.1021/acsnano.1c04943.

*(7)* Particle Analysis. ImageJ Wiki. https://imagej.github.io/imaging/particle-analysis (accessed 2021-09-21).

(8) Mondini, S.; Ferretti, A. M.; Puglisi, A.; Ponti, A. PEBBLES and PEBBLEJUGGLER: Software for Accurate, Unbiased, and Fast Measurement and Analysis of Nanoparticle Morphology from Transmission Electron Microscopy (TEM) Micrographs. Nanoscale 2012, 4 (17), 5356-5372. https://doi.org/10.1039/C2NR31276J.

(9) Laramy, C. R.; Brown, K. A.; O'Brien, M. N.; Mirkin, Chad. A. High-Throughput, Algorithmic Determination of Nanoparticle Structure from Electron Microscopy Images. ACS Nano 2015, 9 (12), 12488-12495. https://doi.org/10.1021/acsnano.5b05968.

(10) Lee, B.; Yoon, S.; Lee, J. W.; Kim, Y; Chang, J.; Yun, J.; Ro, J. C.; Lee, J.-S.; Lee, J. H. Statistical Characterization of the Morphologies of Nanoparticles through Machine Learning Based Electron Microscopy Image Analysis. ACS Nano 2020, 14 (12), 17125-17133. https://doi.org/10.1021/acsnano.0c06809.

(11) Many-Particle Spectroscopy of Atoms, Molecules, Clusters, and Surfaces; Berakdar, J., Kirschner, J., Eds.; Springer US, 2001. https://doi.org/10.1007/978-1-4615-1311-7.

(12) Front Matter. In Inductively Coupled Plasma Mass Spectrometry Handbook; John Wiley & Sons, Ltd, 2005; pp i-xv. https://doi.org/10.1002/9781444305463.fmatter.

(13) Mozhayeva, D.; Engelhard, C. A Critical Review of Single Particle Inductively Coupled Plasma Mass Spectrometry - A Step towards an Ideal Method for Nanomaterial Characterization. J. Anal. At. Spectrom. 2020, 35 (9), 1740-1783. https://doi.org/10.1039/C9JA00206E.

(14) Pace, H. E.; Rogers, N. J.; Jarolimek, C.; Coleman, V. A.; Higgins, C. P.; Ranville, J. F. Determining Transport Efficiency for the Purpose of Counting and Sizing Nanoparticles via Single Particle Inductively Coupled Plasma Mass Spectrometry. Anal. Chem. 2011, 83 (24), 9361-9369. https://doi.org/10.1021/ac201952t.

(15) Pace, H. E.; Rogers, N. J.; Jarolimek, C.; Coleman, V. A.; Higgins, C. P.; Ranville, J. F. Correction to Determining Transport Efficiency for the Purpose of Counting and Sizing Nanoparticles via Single Particle Inductively Coupled Plasma Mass Spectrometry. Anal. Chem. 2012, 84 (10), 4633-4633. https://doi.org/10.1021/ac300942m.

(16) Liu, J.; Murphy, K. E.; MacCuspie, R. I.; Winchester, M. R. Capabilities of Single Particle Inductively Coupled Plasma Mass Spectrometry for the Size Measurement of Nanoparticles: A Case Study on Gold Nanoparticles. Anal. Chem. 2014, 86 (7), 3405-3414. https://doi.org/10.1021/ac403775a.

(17) Hadioui, M.; Knapp, G.; Azimzada, A.; Jreije, I.; Frechette-Viens, L.; Wilkinson, K. J. Lowering the Size Detection Limits of Ag and TiO2 Nanoparticles by Single Particle ICP-MS. Anal. Chem. 2019, 91 (20), 13275-13284. https://doi.org/10.1021/acs.analchem.9b04007.

(18) Hendriks, L.; Gundlach-Graham, A.; Günther, D. Analysis of Inorganic Nanoparticles by Single-Particle Inductively Coupled Plasma Time-of-Flight Mass Spectrometry. Chim. Int. J. Chem. 2018, 72 (4), 221-226. https://doi.org/10.2533/chimia.2018.221.

(19) Folens, K.; Van Acker, T.; Bolea-Fernandez, E.; Cornelis, G.; Vanhaecke, F.; Du Laing, G.; Rauch, S. Identification of Platinum Nanoparticles in Road Dust Leachate by Single Particle Inductively Coupled Plasma-Mass Spectrometry. Sci. Total Environ. 2018, 615, 849-856. https://doi.org/10.1016/j.scitotenv.2017.09.285.

(20) Thomas, R. Practical Guide to ICP-MS, 3rd edition.; CRC Press: Boca Raton, 2013.

(21) Degueldre, C.; Favarger, P.-Y.; Wold, S. Gold Colloid Analysis by Inductively Coupled Plasma-Mass Spectrometry in a Single Particle Mode. Anal. Chim. Acta 2006, 555 (2), 263-268. https://doi.org/10.1016/j.aca.2005.09.021.

(22) Degueldre, C.; Favarger, P.-Y.; Rossé, R.; Wold, S. Uranium Colloid Analysis by Single Particle Inductively Coupled Plasma-Mass Spectrometry. Talanta 2006, 68 (3), 623-628. https://doi.org/10.1016/j.talanta.2005.05.006.

(23) Ramkorun-Schmidt, B.; Pergantis, S. A.; Esteban-Fernández, D.; Jakubowski, N.; Günther, D. Investigation of a Combined Microdroplet Generator and Pneumatic Nebulization System for Quantitative Determination of Metal-Containing Nanoparticles Using ICPMS. Anal. Chem. 2015, 87 (17), 8687-8694. https://doi.org/10.1021/acs.analchem.5b01604.

(24) Ho, K.-S.; Lui, K.-O.; Lee, K.-H.; Chan, W.-T. Considerations of Particle Vaporization and Analyte Diffusion in Single-Particle Inductively Coupled Plasma-Mass Spectrometry. Spectrochim. Acta Part B At. Spectrosc. 2013, 89, 30-39. https://doi.org/10.1016/j.sab.2013.08.012.

(25) Skrabalak, S. E.; Au, L.; Li, X.; Xia, Y. Facile Synthesis of Ag Nanocubes and Au Nanocages. Nat. Protoc. 2007, 2 (9), 2182-2190. https://doi.org/10.1038/nprot.2007.326.

(26) Lim, B.; Jiang, M.; Camargo, P. H. C.; Cho, E. C.; Tao, J.; Lu, X.; Zhu, Y.; Xia, Y. Pd-Pt Bimetallic Nanodendrites with High Activity for Oxygen Reduction. Science 2009, 324 (5932), 1302-1305. https://doi.org/10.1126/science.1170377.

(27) He, R.; Wang, Y.-C.; Wang, X.; Wang, Z.; Liu, G.; Zhou, W.; Wen, L.; Li, Q.; Wang, X.; Chen, X.; Zeng, J.; Hou, J. G. Facile Synthesis of Pentacle Gold-Copper Alloy Nanocrystals and Their Plasmonic and Catalytic Properties. Nat. Commun. 2014, 5 (1), 1-10. https://doi.org/10.1038/ncomms5327.

(28) Murray, C. B.; Norris, D. J.; Bawendi, M. G. Synthesis and Characterization of Nearly Monodisperse CdE (E = Sulfur, Selenium, Tellurium) Semiconductor Nanocrystallites. J. Am. Chem. Soc. 1993, 115 (19), 8706-8715. https://doi.org/10.1021/ja00072a025.

(29) Protesescu, L.; Yakunin, S.; Bodnarchuk, M. I.; Krieg, F.; Caputo, R.; Hendon, C. H.; Yang, R. X.; Walsh, A.; Kovalenko, M. V. Nanocrystals of Cesium Lead Halide Perovskites (CsPbX3, X = Cl, Br, and I): Novel Optoelectronic Materials Showing Bright Emission with Wide Color Gamut. Nano Lett. 2015, 15 (6), 3692-3696. https://doi.org/10.1021/nl5048779.

(30) Bernal, M.; Bagger, A.; Scholten, F.; Sinev, I.; Bergmann, A.; Ahmadi, M.; Rossmeisl, J.; Cuenya, B. R. CO2 Electroreduction on Copper-Cobalt Nanoparticles: Size and Composition Effect. Nano Energy 2018, 53, 27-36. https://doi.org/10.1016/j.nanoen.2018.08.027.

(31) Tao, A. R.; Habas, S.; Yang, P. Shape Control of Colloidal Metal Nanocrystals. Small 2008, 4 (3), 310-325. https://doi.org/10.1002/smll.200701295.

(32) Jackson, W. M.; Drury, J. S. Miscibility of Organic Solvent Pairs. Ind. Eng. Chem. 1959, 51 (12), 1491-1493. https://doi.org/10.1021/ie50600a039.

(33) Boom, A. W.; Browner, R. F. Effects of Organic Solvents in Inductively Coupled Plasma Atomic Emission Spectrometry. Anal. Chem. 1982, 54 (8), 1402-1410. https://doi.org/10.1021/ac00245a033.

(34) Rucareanu, S.; Maccarini, M.; Shepherd, J. L.; Lennox, R. B. Polymer-Capped Gold Nanoparticles by Ligand-Exchange Reactions. J. Mater. Chem. 2008, 18 (47), 5830-5834. https://doi.org/10.1039/B806375C.

(35) Dong, A.; Ye, X.; Chen, J.; Kang, Y.; Gordon, T.; Kikkawa, J. M.; Murray, C. B. A Generalized Ligand-Exchange Strategy Enabling Sequential Surface Functionalization of Colloidal Nanocrystals. J. Am. Chem. Soc. 2011, 133 (4), 998-1006. https://doi.org/10.1021/ja108948z.

(36) Nag, A.; Kovalenko, M. V.; Lee, J.-S.; Liu, W.; Spokoyny, B.; Talapin, D. V. Metal-Free Inorganic Ligands for Colloidal Nanocrystals: S2-, HS-, Se2-, HSe-, Te2-, HTe-, TeS32-, OH-, and NH2- as Surface Ligands. J. Am. Chem. Soc. 2011, 133 (27), 10612-10620. https://doi.org/10.1021/ja2029415.

(37) Meerwein, H.; Hinz, G.; Hofmann, P.; Kroning, E.; Pfeil, E. Über Tertiäre Oxoniumsalze, I. J. Für Prakt. Chem. 1937, 147 (10-12), 257-285. https://doi.org/10.1002/prac.19371471001.

(38) Rosen, E. L.; Buonsanti, R.; Llordes, A.; Sawvel, A. M.; Milliron, D. J.; Helms, B. A. Exceptionally Mild Reactive Stripping of Native Ligands from Nanocrystal Surfaces by Using Meerwein's Salt. Angew. Chem. Int. Ed. 2012, 51 (3), 684-689. https://doi.org/10.1002/anie.201105996.

(39) Shaw, P.; Donard, A. Nano-Particle Analysis Using Dwell Times between 10 Ms and 70 Ms with an Upper Counting Limit of Greater than $3 \times 10$ 7 Cps and a Gold Nanoparticle Detection Limit of Less than 10 Nm Diameter. J. Anal. At. Spectrom. 2016, 31 (6), 1234-1242. https://doi.org/10.1039/C6JA00047A.

(40) Strenge, I.; Engelhard, C. Single Particle Inductively Coupled Plasma Mass Spectrometry: Investigating Nonlinear Response Observed in Pulse Counting Mode and Extending the Linear Dynamic Range by Compensating for Dead Time Related Count Losses on a Microsecond Timescale. J. Anal. At. Spectrom. 2020, 35 (1), 84-99. https://doi.org/10.1039/C9JA00327D.

(41) Lee, S.; Bi, X.; Reed, R. B.; Ranville, J. F.; Herckes, P.; Westerhoff, P. Nanoparticle Size Detection Limits by Single Particle ICP-MS for 40 Elements. Environ. Sci. Technol. 2014, 48 (17), 10291-10300. https://doi.org/10.1021/es502422v.

(42) Reske, R.; Mistry, H.; Behafarid, F.; Roldan Cuenya, B.; Strasser, P. Particle Size Effects in the Catalytic Electroreduction of CO2 on Cu Nanoparticles. J. Am. Chem. Soc. 2014, 136 (19), 6978-6986. https://doi.org/10.1021/ja500328k.

(43) Hou, Y; Kovács, N.; Xu, H.; Sun, C.; Erni, R.; Gálvez-Vázquez, M. de J.; Rieder, A.; Hu, H.; Kong, Y.; Liu, M.; Wiley, B. J.; Vesztergom, S.; Broekmann, P. Limitations of Identical Location SEM as a Method of Degradation Studies on Surfactant Capped Nanoparticle Electrocatalysts. J. Catal. 2021, 394, 58-66. https://doi.org/10.1016/j.jcat.2020.12.006.

(44) Holišová, V.; Urban, M.; Konvičková, Z.; Kolenčík, M.; Mančík, P.; Slabotinský, J.; Kratošová, G.; Plachá, D. Colloidal Stability of Phytosynthesised Gold Nanoparticles and Their Catalytic Effects for Nerve Agent Degradation. Sci. Rep. 2021, 11 (1), 4071. https://doi.org/10.1038/s41598-021-83460-1.

(45) Merrifield, R. C.; Stephan, C.; Lead, J. R. Single-Particle Inductively Coupled Plasma Mass Spectroscopy Analysis of Size and Number Concentration in Mixtures of Monometallic and Bimetallic (Core-Shell) Nanoparticles. Talanta 2017, 162, 130-134. https://doi.org/10.1016/j.talanta.2016.09.070.

(46) Borovinskaya, O.; Hattendorf, B.; Tanner, M.; Gschwind, S.; Günther, D. A Prototype of a New Inductively Coupled Plasma Time-of-Flight Mass Spectrometer Providing Temporally Resolved, Multi-Element Detection of Short Signals Generated by Single Particles and Droplets. J. Anal. At. Spectrom. 2013, 28 (2), 226-233. https://doi.org/10.1039/C2JA30227F.

(47) Praetorius, A.; Gundlach-Graham, A.; Goldberg, E.; Fabienke, W.; Navratilova, J.; Gondikas, A.; Kaegi, R.; Günther, D.; Hofmann, T.; Kammer, F. von der. Single-Particle Multi-Element Fingerprinting (SpMEF) Using Inductively-Coupled Plasma Time-of-Flight Mass Spectrometry (ICP-TOFMS) to Identify Engineered Nanoparticles against the Elevated Natural Background in Soils. Environ. Sci. Nano 2017, 4 (2), 307-314. https://doi.org/10.1039/C6EN00455E.

(48) Naasz, S.; Weigel, S.; Borovinskaya, O.; Serva, A.; Cascio, C.; Undas, A. K.; Simeone, F. C.; Marvin, H. J. P.; Peters, R. J. B. Multi-Element Analysis of Single Nanoparticles by ICP-MS Using Quadrupole and Time-of-Flight Technologies. J. Anal. At. Spectrom. 2018, 33 (5), 835-845. https://doi.org/10.1039/C7JA00399D.

**Claims**

1. Single-particle inductively-coupled plasma mass spectrometry particle sizing and counting method, the method comprising the steps of:

   - providing or receiving (S1) an intensity ($I_p$)-versus-counts (Cts) histogram of particles detected by an inductively-coupled plasma mass spectrometer (ICP-MS), the intensity ($I_p$) representing particle detection and the count (Cts) representing particle detection frequency,
   - providing or receiving (S2) mass flux calibration data relating a value of the intensity ($I_p$) measurement or data of the inductively-coupled plasma mass spectrometer to a mass of material detected per acquisition interval or dwell time,

- determining (S3) a particle mass $(m_p)$ of the particles detected using the mass flux calibration data,
- determining (S4) a particle volume $(V_p)$ of the detected particles using the determined particle mass $(m_p)$, and
- determining (S5) a particle size of the particles detected using the determined particle volume $(V_p)$ of the particles detected and a determined or attributed geometry or shape of the detected particles;

**characterized in that** the intensity $(I_p)$-versus-counts (Cts) histogram of particles detected by the inductively-coupled plasma mass spectrometer (ICP-MS) is determined using obtained, per acquisition interval or dwell time, intensity $(I_p)$ measurements obtained by the inductively-coupled plasma mass spectrometer, the obtaining having been repeated over a total time duration to obtain a plurality of said intensity $(I_p)$ measurements per acquisition interval or dwell time, and wherein the intensity $(I_p)$-versus-counts (Cts) histogram is determined by relating (i) each intensity $(I_p)$ measurement of the plurality of said intensity $(I_p)$ measurements per acquisition interval or dwell time to (ii) the number of times that intensity $(I_p)$ measurement has been obtained, wherein the intensity $(I_p)$ measurement of the histogram relates to a detected particle, and the counts relates to the number of times that particle has been detected.

2. Method according to claim 1, further including determining a particle atomicity or number of atoms in the particle $(A_p)$ of the detected particles using the determined particle mass $(m_p)$.

3. Method according to any one of the previous claims, wherein the determined geometry or shape of the detected particles is predetermined using electron microscopy.

4. Method according to any one of the previous claims, wherein the particle size of the particles detected is determined using a geometrical descriptor associated with the determined geometry or shape of the detected particles.

5. Method according to the previous claim, wherein the geometrical descriptor comprises or consists of a particle edge-length (el).

6. Method according to any one of the previous claims, wherein the determined or attributed geometry or shape of the detected particles is spherical, cubic, cube octahedral, octahedral, truncated octahedral, tetrahedral, or rhombic dodecahedral.

7. Method according to the previous claim, wherein the determined or attributed geometry or shape of the detected particles is spherical, and an edge-length (el) is given by:

$$el_{Sph} = \left(\frac{6V_p}{\pi}\right)^{1/3}$$

or wherein the determined or attributed geometry or shape of the detected particles is cubic, and an edge-length is the cube root of the volume $(V_p)$:

$$el_{Cu} = \left(V_p\right)^{1/3}$$

or wherein the determined or attributed geometry or shape of the detected particles is cuboctahedral, and an edge-length is given by:

$$el_{CuOh} = \left(\frac{3V_p}{5\sqrt{2}}\right)^{1/3}$$

or wherein the determined or attributed geometry or shape of the detected particles is octahedral, and an edge-length is given by:

$$el_{Oh} = \left(\frac{3V_p}{\sqrt{3}}\right)^{1/3}$$

or wherein the determined or attributed geometry or shape of the detected particles is truncated octahedral shape, and an edge-length (el) is given by:

$$el_{TOh} = \left(\frac{V_p}{8\sqrt{2}}\right)^{1/3}$$

or wherein the determined or attributed geometry or shape of the detected particles is tetrahedral, and an edge-length (el) is given by:

$$el_{Th} = \left(6\sqrt{2}V_p\right)^{1/3}$$

or wherein the determined or attributed geometry or shape of the detected particles is rhombic dodecahedral, and the edge-length (el) is given by:

$$el_{RDh} = \left(\frac{9V_p}{16\sqrt{3}}\right)^{1/3}.$$

8. Method according to any one of the previous claims 3 to 7, wherein the particle atomicity ($A_p$) of the detected particles is determined using the determined particle mass ($m_p$) and the atomic mass value of the detected particles; or

   wherein the particle atomicity ($A_p$) of the detected particles is determined using the determined particle mass ($m_p$) and the atomic mass value of the detected particles, and wherein the atomic mass value of the detected particles is a predetermined atomic mass value; or
   wherein a particle composition distribution is determined using the atomicity ($A_p$) of the detected particles; or
   wherein a particle composition distribution is determined using the atomicity ($A_p$) of the detected particles wherein the particle composition distribution is used to determine the particle structure such as core-shell, homogeneously mixed and or heterostructure.

9. Method according to any one of the previous claims, wherein the particle mass ($m_p$) of the particles detected is calculated using a slope value (*a*) determined from the mass flux calibration data; or

   wherein the particle mass ($m_p$) of the particles detected is calculated using the following equation:

$$m_p = \frac{I_p}{am_f\eta_i}$$

   wherein a is a slope value determined from the mass flux calibration data, $\eta_i$ is an ionization efficiency correction factor having a positive value between 0 and 1, and $m_f$ is a mass fraction factor having a positive value between 0 and 1; or
   wherein the mass flux calibration data is determined by converting dissolved metal calibration data or at least one dissolved metal calibration curve relating a measured intensity to concentration using the following equation:

$$\Delta m = \eta_t t_d Q C$$

   in which $\eta_t$ is a transport efficiency factor correcting for ion losses in the inductively-coupled plasma mass spectrometer, $t_d$ is a dwell time or acquisition interval time, $Q$ a sample flow rate of the inductively-coupled plasma mass spectrometer and C a dissolved ion concentration.

10. Method according to any one of the previous claims, wherein the intensity ($I_p$)-versus-counts (Cts) histogram is provided by obtained intensity ($I_p$) measurements, and by removing a background intensity signal from the intensity

($I_p$) measurements; or

wherein the intensity ($I_p$)-versus-counts (Cts) histogram is provided by obtained intensity ($I_p$) measurements, and by removing a background intensity signal from the intensity ($I_p$) measurements, and wherein removing the background signal is carried out by averaging over all intensity values and determining a standard deviation ($\sigma$), and defining a particle detection as any intensity value that is at least 3 times the standard deviation ($\sigma$) + the mean ($\mu$) above a background intensity value, and arranging the particle detections based on their respective intensity values and as a counts-versus-intensity histogram.

11. Method according to any one of the previous claims, further including a sample or dilution preparation step comprising using an alkylating agent or weak alkylating agent to carry out surfactant stripping on a plurality of particles to be sized and counted, to remove native surfactants and replace the native surfactants with at least one inorganic counter ion; or

further including a sample or dilution preparation step comprising using an alkylating agent or weak alkylating agent to carry out surfactant stripping on a plurality of particles to be sized and counted, to remove native surfactants and replace the native surfactants with at least one inorganic counter ion, and further including a step of washing after introduction of the alkylating agent or weak alkylating agent; or

further including a sample or dilution preparation step comprising using an alkylating agent or weak alkylating agent to carry out surfactant stripping on a plurality of particles to be sized and counted, to remove native surfactants and replace the native surfactants with at least one inorganic counter ion, and further including a step of washing after introduction of the alkylating agent or weak alkylating agent, wherein the plurality of particles has been prepared or synthesized in non-polar organic solvents.

12. Method according to claim 11, wherein a concentration of the alkylating agent or the weak alkylating agent is determined to carry out surfactant stripping without etching or minimally etching a surface of the particles; or

wherein a concentration of the alkylating agent or the weak alkylating agent is determined to carry out surfactant stripping without etching or minimally etching a surface of the particles, and wherein the alkylating agent or weak alkylating agent comprises or consists of a triethyl oxonium salt; or

wherein a concentration of the alkylating agent or the weak alkylating agent is determined to carry out surfactant stripping without etching or minimally etching a surface of the particles, and wherein the alkylating agent or weak alkylating agent comprises or consists of triethyl oxonium hexafluorophosphate or triethyl oxonium tetrafluoroborate.

13. Method according to any one of the previous claims 11 to 12, further comprising dispersing the particles stabilized with an inorganic counter ion in a polar solvent; or

further comprising dispersing the particles stabilized with an inorganic counter ion in a polar solvent, and further comprising preparing an aqueous dispersion; or

further comprising dispersing the particles stabilized with an inorganic counter ion in a polar solvent, and further comprising preparing an aqueous dispersion, and further comprising providing the aqueous dispersion to an inductively-coupled plasma mass spectrometer to carry out intensity ($I_p$) measurements representing particle detection as a function of time.

14. System including:

- a processor; and
- a memory including a computer program comprising instructions which, when the computer program is executed by the processor, cause the system to carry out the method of claim 1, the method comprising the steps of:

- receiving (S1) an intensity (Ip)-versus-counts (Cts) histogram of particles detected by an inductively-coupled plasma mass spectrometer (ICP-MS), the intensity (Ip ) representing particle detection and the count (Cts) representing particle detection frequency,
- receiving (S2) mass flux calibration data relating a value of the intensity (Ip ) measurement or data of the inductively-coupled plasma mass spectrometer to a mass of material detected per acquisition interval or dwell time,
- determining (S3) a particle mass (mp) of the particles detected using the mass flux calibration data,
- determining (S4) a particle volume (Vp) of the detected particles using the determined particle mass (mp), and

- determining (S5) a particle size of the particles detected using the determined particle volume (Vp) of the particles detected and a determined or attributed geometry or shape of the detected particles;

**characterized in that** the intensity (Ip)-versus-counts (Cts) histogram of particles detected by the inductively-coupled plasma mass spectrometer (ICP-MS) is determined using obtained, per acquisition interval or dwell time, intensity (Ip) measurements obtained by the inductively-coupled plasma mass spectrometer, the obtaining having been repeated over a total time duration to obtain a plurality of said intensity (Ip) measurements per acquisition interval or dwell time, and wherein the intensity (Ip)-versus-counts (Cts) histogram is determined by relating (i) each intensity (Ip) measurement of the plurality of said intensity (Ip) measurements per acquisition interval or dwell time to (ii) the number of times that intensity (Ip) measurement has been obtained, wherein the intensity (Ip) measurement of the histogram relates to a detected particle, and the counts relates to the number of times that particle has been detected.

15. A computer program comprising instructions which, when the program is executed by a computer, cause the computer to carry out the method of claim 1, the method comprising the steps of:

- receiving (S1) an intensity ($I_p$)-versus-counts (Cts) histogram of particles detected by an inductively-coupled plasma mass spectrometer (ICP-MS), the intensity ($I_p$) representing particle detection and the count (Cts) representing particle detection frequency,
- receiving (S2) mass flux calibration data relating a value of the intensity ($I_p$) measurement or data of the inductively-coupled plasma mass spectrometer to a mass of material detected per acquisition interval or dwell time,
- determining (S3) a particle mass ($m_p$) of the particles detected using the mass flux calibration data,
- determining (S4) a particle volume ($V_p$) of the detected particles using the determined particle mass ($m_p$), and
- determining (S5) a particle size of the particles detected using the determined particle volume ($V_p$) of the particles detected and a determined or attributed geometry or shape of the detected particles;

**characterized in that** the intensity (Ip)-versus-counts (Cts) histogram of particles detected by the inductively-coupled plasma mass spectrometer (ICP-MS) is determined using obtained, per acquisition interval or dwell time, intensity (Ip) measurements obtained by the inductively-coupled plasma mass spectrometer, the obtaining having been repeated over a total time duration to obtain a plurality of said intensity (Ip) measurements per acquisition interval or dwell time, and wherein the intensity (Ip)-versus-counts (Cts) histogram is determined by relating (i) each intensity (Ip) measurement of the plurality of said intensity (Ip) measurements per acquisition interval or dwell time to (ii) the number of times that intensity (Ip) measurement has been obtained, wherein the intensity (Ip) measurement of the histogram relates to a detected particle, and the counts relates to the number of times that particle has been detected.

## Patentansprüche

1. Verfahren zur Größenbestimmung und Zählung von induktiv gekoppelten Einzelpartikel-Plasmamassenspektrometrie-Partikeln, wobei das Verfahren die folgenden Schritte umfasst:

- Bereitstellen oder Empfangen (S1) eines Intensität-($I_p$)-versus-Zählungen-(Cts)-Histogramms von Partikeln, die durch ein induktiv gekoppeltes Plasmamassenspektrometer (ICP-MS) detektiert werden, wobei die Intensität ($I_p$) eine Partikeldetektion repräsentiert und die Zählung (Cts) eine Partikeldetektionsfrequenz repräsentiert;
- Bereitstellen oder Empfangen (S2) von Massenfluss-Kalibrierungsdaten, die einen Wert der Intensitätsmessung ($I_p$) oder Daten des induktiv gekoppelten Plasmamassenspektrometers mit einer Masse von Material in Beziehung setzen, die pro Erfassungsintervall oder Verweilzeit detektiert wird,
- Bestimmen (S3) einer Partikelmasse ($m_p$) der detektierten Partikel unter Verwendung der Massenfluss-Kalibrierungsdaten,
- Bestimmen (S4) eines Partikelvolumens ($V_p$) der detektierten Partikel unter Verwendung der bestimmten Partikelmasse ($m_p$) und
- Bestimmen (S5) einer Partikelgröße der detektierten Partikel unter Verwendung des bestimmten Partikelvolumens ($V_p$) der detektierten Partikel und einer bestimmten oder zugeordneten Geometrie oder Form der detektierten Partikel;

**dadurch gekennzeichnet, dass** das Intensität-($I_p$)-versus-Zählungen-(Cts)-Histogramm von Partikeln, die durch das induktiv gekoppelte Plasmamassenspektrometer (ICP-MS) detektiert werden, bestimmt wird unter Verwendung von pro Erfassungsintervall oder Verweilzeit erhaltenen Intensitätsmessungen ($I_p$), die durch das induktiv gekoppelte Plasmamassenspektrometer erhalten werden, wobei das Erhalten über eine Gesamtzeitdauer wiederholt wurde, um eine Vielzahl der Intensitätsmessungen ($I_p$) pro Erfassungsintervall oder Verweilzeit zu erhalten, und wobei

das Intensität-($I_p$)-versus-Zählungen-(Cts)-Histogramm bestimmt wird, indem (i) jede Intensitätsmessung ($I_p$) der Vielzahl der Intensitätsmessungen ($I_p$) pro Erfassungsintervall oder Verweilzeit mit (ii) der Anzahl von Malen in Beziehung gesetzt wird, dass diese Intensitätsmessung ($I_p$) erhalten wurde,

wobei die Intensitätsmessung ($I_p$) des Histogramms einen detektierten Partikel betrifft und die Zählungen die Anzahl von Malen betrifft, dass dieses Partikel detektiert wurde.

2. Verfahren nach Anspruch 1, das ferner Bestimmen einer Partikelatomizität oder einer Anzahl von Atomen in dem Partikel ($A_p$) der detektierten Partikel unter Verwendung der bestimmten Partikelmasse ($m_p$) beinhaltet.

3. Verfahren nach einem der vorhergehenden Ansprüche, wobei die bestimmte Geometrie oder Form der detektierten Partikel unter Verwendung von Elektronenmikroskopie vorbestimmt wird.

4. Verfahren nach einem der vorhergehenden Ansprüche, wobei die Partikelgröße der detektierten Partikel unter Verwendung eines geometrischen Deskriptors bestimmt wird, der mit der bestimmten Geometrie oder Form der detektierten Partikel assoziiert ist.

5. Verfahren nach dem vorhergehenden Anspruch, wobei der geometrische Deskriptor eine Partikelkantenlänge (el) umfasst oder daraus besteht.

6. Verfahren nach einem der vorhergehenden Ansprüche, wobei die bestimmte oder zugeordnete Geometrie oder Form der detektierten Partikel sphärisch, kubisch, würfeloktaedrisch, oktaedrisch, abgeflacht oktaedrisch, tetraedrisch oder rhombisch dodekaedrisch ist.

7. Verfahren nach dem vorhergehenden Anspruch, wobei die bestimmte oder zugeordnete Geometrie oder Form der detektierten Partikel kugelförmig ist und eine Kantenlänge (el) gegeben ist durch:

$$\mathrm{el_{Sph}} = \left(\frac{6V_p}{\pi}\right)^{1/3}$$

oder wobei die bestimmte oder zugeordnete Geometrie oder Form der detektierten Partikel kubisch ist und eine Kantenlänge die Kubikwurzel des Volumens ($V_p$) ist:

$$\mathrm{el_{Cu}} = \left(V_p\right)^{1/3}$$

oder wobei die bestimmte oder zugeordnete Geometrie oder Form der detektierten Partikel würfeloktaedrisch ist und eine Kantenlänge gegeben ist durch:

$$\mathrm{el_{CuOh}} = \left(\frac{3V_p}{5\sqrt{2}}\right)^{1/3}$$

oder wobei die bestimmte oder zugeordnete Geometrie oder Form der detektierten Partikel oktaedrisch ist und eine Kantenlänge gegeben ist durch:

$$\mathrm{el_{Oh}} = \left(\frac{3V_p}{\sqrt{3}}\right)^{1/3}$$

oder wobei die bestimmte oder zugeordnete Geometrie oder Form der detektierten Partikel eine abgeflacht oktaedrische Form ist und eine Kantenlänge (el) gegeben ist durch:

$$el_{TOh} = \left(\frac{V_p}{8\sqrt{2}}\right)^{1/3}$$

oder wobei die bestimmte oder zugeordnete Geometrie oder Form der detektierten Partikel tetraedrisch ist und eine Kantenlänge (el) gegeben ist durch:

$$el_{Th} = \left(6\sqrt{2}V_p\right)^{1/3}$$

oder wobei die bestimmte oder zugeordnete Geometrie oder Form der detektierten Partikel rhombisch dodekaedrisch ist und die Kantenlänge (el) gegeben ist durch:

$$el_{RDh} = \left(\frac{9V_p}{16\sqrt{3}}\right)^{1/3}.$$

8. Verfahren nach einem der vorhergehenden Ansprüche 3 bis 7, wobei die Partikelatomizität ($A_p$) der detektierten Partikel unter Verwendung der bestimmten Partikelmasse ($m_p$) und des Atommassenwerts der detektierten Partikel bestimmt wird; oder

wobei die Partikelatomizität ($A_p$) der detektierten Partikel unter Verwendung der bestimmten Partikelmasse ($m_p$) und des Atommassenwerts der detektierten Partikel bestimmt wird und wobei der Atommassenwert der detektierten Partikel ein vorbestimmter Atommassenwert ist; oder
wobei eine Partikelzusammensetzungsverteilung unter Verwendung der Atomizität ($A_p$) der detektierten Partikel bestimmt wird; oder
wobei eine Partikelzusammensetzungsverteilung unter Verwendung der Atomizität ($A_p$) der detektierten Partikel bestimmt wird, wobei die Partikelzusammensetzungsverteilung verwendet wird, um die Partikelstruktur, wie etwa Kern-Schale, homogen gemischt und oder Heterostruktur, zu bestimmen.

9. Verfahren nach einem der vorhergehenden Ansprüche, wobei die Partikelmasse ($m_p$) der detektierten Partikel unter Verwendung eines Steigungswerts (a) berechnet wird, der aus den Massenfluss-Kalibrierungsdaten bestimmt wird; oder

wobei die Partikelmasse ($m_p$) der detektierten Partikel unter Verwendung der folgenden Gleichung berechnet wird:

$$m_p = \frac{I_p}{am_f\eta_i}$$

wobei a ein Steigungswert ist, der aus den Massenfluss-Kalibrierungsdaten bestimmt wird, $\eta_i$ ein Ionisationseffizienz-Korrekturfaktor mit einem positiven Wert zwischen 0 und 1 ist und $m_f$ ein Massenfraktionsfaktor mit einem positiven Wert zwischen 0 und 1 ist; oder
wobei die Massenfluss-Kalibrierungsdaten durch Umwandeln von Kalibrierungsdaten von gelöstem Metall oder mindestens einer Kalibrierungskurve von gelöstem Metall, die eine gemessene Intensität mit einer Konzentration in Beziehung setzen, unter Verwendung der folgenden Gleichung bestimmt werden:

$$\Delta m = \eta_t t_d QC$$

wobei $\eta_t$ ein Transporteffizienzfaktor ist, der Ionenverluste in dem induktiv gekoppelten Plasmamassenspektrometer korrigiert, $t_d$ eine Verweilzeit oder Erfassungsintervallzeit ist, Q eine Probenflussrate des induktiv gekoppelten Plasmamassenspektrometers ist und C eine Konzentration gelöster Ionen ist.

10. Verfahren nach einem der vorhergehenden Ansprüche, wobei das Intensität-($I_p$)-versus-Zählungen-(Cts)-Histogramm durch erhaltene Intensitätsmessungen ($I_p$) und durch Entfernen eines Hintergrundintensitätssignals aus den Intensitätsmessungen ($I_p$) bereitgestellt wird; oder wobei das Intensität-($I_p$)-versus-Zählungen-(Cts)-Histogramm durch erhaltene Intensitätsmessungen ($I_p$) und durch Entfernen eines Hintergrundintensitätssignals aus den Inten-

sitätsmessungen ($I_p$) bereitgestellt wird und wobei Entfernen des Hintergrundsignals durch Mitteln über alle Intensitätswerte und Bestimmen einer Standardabweichung ($\sigma$) und Definieren einer Partikeldetektion als jeder Intensitätswert, der mindestens das 3-fache der Standardabweichung ($\sigma$) + dem Mittelwert ($\mu$) über einem Hintergrundintensitätswert ist, und Anordnen der Partikeldetektionen basierend auf ihren jeweiligen Intensitätswerten und als ein Zählungenversus-Intensität-Histogramm durchgeführt wird.

11. Verfahren nach einem der vorhergehenden Ansprüche, ferner beinhaltend einen Proben- oder Verdünnungsherstellungsschritt, der eine Verwendung eines Alkylierungsmittels oder eines schwachen Alkylierungsmittels umfasst, um Tensidstrippen an einer Vielzahl von Partikeln durchzuführen, deren Größe bestimmt werden soll und die gezählt werden sollen, um native Tenside zu entfernen und die nativen Tenside durch mindestens ein anorganisches Gegenion zu ersetzen; oder

ferner beinhaltend einen Proben- oder Verdünnungsherstellungsschritt, der eine Verwendung eines Alkylierungsmittels oder eines schwachen Alkylierungsmittels umfasst, um Tensidstrippen an einer Vielzahl von Partikeln durchzuführen, deren Größe bestimmt werden soll und die gezählt werden sollen, um native Tenside zu entfernen und die nativen Tenside durch mindestens ein anorganisches Gegenion zu ersetzen, und ferner beinhaltend einen Schritt des Waschens nach Einführung des Alkylierungsmittels oder des schwachen Alkylierungsmittels; oder

ferner beinhaltend einen Proben- oder Verdünnungsherstellungsschritt, der eine Verwendung eines Alkylierungsmittels oder eines schwachen Alkylierungsmittels umfasst, um Tensidstrippen an einer Vielzahl von Partikeln durchzuführen, deren Größe bestimmt werden soll und die gezählt werden sollen, um native Tenside zu entfernen und die nativen Tenside durch mindestens ein anorganisches Gegenion zu ersetzen, und ferner beinhaltend einen Schritt des Waschens nach Einführung des Alkylierungsmittels oder des schwachen Alkylierungsmittels, wobei die Vielzahl von Partikeln in unpolaren organischen Lösungsmitteln hergestellt oder synthetisiert wurde.

12. Verfahren nach Anspruch 11, wobei eine Konzentration des Alkylierungsmittels oder des schwachen Alkylierungsmittels bestimmt wird, um ein Tensidstrippen durchzuführen, ohne eine Oberfläche der Partikel zu ätzen oder minimal zu ätzen; oder

wobei eine Konzentration des Alkylierungsmittels oder des schwachen Alkylierungsmittels bestimmt wird, um ein Tensidstrippen durchzuführen, ohne eine Oberfläche der Partikel zu ätzen oder minimal zu ätzen, und wobei das Alkylierungsmittel oder das schwache Alkylierungsmittel ein Triethyloxonium-Salz umfasst oder daraus besteht; oder

wobei eine Konzentration des Alkylierungsmittels oder des schwachen Alkylierungsmittels bestimmt wird, um Tensidstrippen durchzuführen, ohne eine Oberfläche der Partikel zu ätzen oder minimal zu ätzen, und wobei das Alkylierungsmittel oder das schwache Alkylierungsmittel Triethyloxoniumhexafluorophosphat oder Triethyloxoniumtetrafluoroborat umfasst oder daraus besteht.

13. Verfahren nach einem der vorhergehenden Ansprüche 11 bis 12, ferner umfassend Dispergieren der mit einem anorganischen Gegenion stabilisierten Partikel in einem polaren Lösungsmittel; oder

ferner umfassend Dispergieren der mit einem anorganischen Gegenion stabilisierten Partikel in einem polaren Lösungsmittel und ferner umfassend Herstellen einer wässrigen Dispersion; oder

ferner umfassend Dispergieren der mit einem anorganischen Gegenion stabilisierten Partikel in einem polaren Lösungsmittel und ferner umfassend Herstellen einer wässrigen Dispersion und ferner umfassend Bereitstellen der wässrigen Dispersion einem induktiv gekoppelten Plasmamassenspektrometer, um Intensitätsmessungen ($I_p$) durchzuführen, die eine Partikeldetektion als eine Funktion der Zeit repräsentieren.

14. System, das Folgendes beinhaltet:

- einen Prozessor; und
- einen Speicher, der ein Computerprogramm beinhaltet, das Anweisungen umfasst, die, wenn das Computerprogramm durch den Prozessor ausgeführt wird, das System veranlassen, das Verfahren nach Anspruch 1 auszuführen, wobei das Verfahren die folgenden Schritte umfasst:

- Empfangen (S1) eines Intensität-($I_p$)-versus-Zählungen-(Cts)-Histogramms von Partikeln, die durch ein induktiv gekoppeltes Plasmamassenspektrometer (ICP-MS) detektiert werden, wobei die Intensität ($I_p$) eine

Partikeldetektion repräsentiert und die Zählung (Cts) eine Partikeldetektionsfrequenz repräsentiert,

- Empfangen (S2) von Massenfluss-Kalibrierungsdaten, die einen Wert der Intensitätsmessung ($I_p$) oder Daten des induktiv gekoppelten Plasmamassenspektrometers mit einer Masse von Material in Beziehung setzen, die pro Erfassungsintervall oder Verweilzeit detektiert wird,

- Bestimmen (S3) einer Partikelmasse ($m_p$) der detektierten Partikel unter Verwendung der Massenfluss-Kalibrierungsdaten,

- Bestimmen (S4) eines Partikelvolumens ($V_p$) der detektierten Partikel unter Verwendung der bestimmten Partikelmasse ($m_p$) und

- Bestimmen (S5) einer Partikelgröße der detektierten Partikel unter Verwendung des bestimmten Partikelvolumens ($V_p$) der detektierten Partikel und einer bestimmten oder zugeordneten Geometrie oder Form der detektierten Partikel; **dadurch gekennzeichnet, dass** das Intensität- ($I_p$) -versus-Zählungen-(Cts)-Histogramm von Partikeln, die durch das induktiv gekoppelte Plasmamassenspektrometer (ICP-MS) detektiert werden, unter Verwendung von pro Erfassungsintervall oder Verweilzeit erhaltenen Intensitätsmessungen ($I_p$) bestimmt wird, die durch das induktiv gekoppelte Plasmamassenspektrometer erhalten werden, wobei das Erhalten über eine Gesamtzeitdauer wiederholt wurde, um eine Vielzahl der Intensitätsmessungen ($I_p$) pro Erfassungsintervall oder Verweilzeit zu erhalten, und wobei das Intensität-($I_p$)-versus-Zählungen-(Cts)-Histogramm bestimmt wird, indem (i) jede Intensitätsmessung ($I_p$) der Vielzahl der Intensitätsmessungen ($I_p$) pro Erfassungsintervall oder Verweilzeit mit (ii) der Anzahl von Malen, dass diese Intensitätsmessung ($I_p$) erhalten wurde, in Beziehung gesetzt wird, wobei die Intensitätsmessung ($I_p$) des Histogramms ein detektiertes Partikel betrifft und die Zählungen die Anzahl von Malen betrifft, dass dieses Partikel detektiert wurde.

15. Computerprogramm, Anweisungen umfassend, die, wenn das Programm durch einen Computer ausgeführt wird, bewirken, dass der Computer das Verfahren nach Anspruch 1 ausführt, wobei das Verfahren die folgenden Schritte umfasst:

- Empfangen (S1) eines Intensität-($I_p$)-versus-Zählungen-(Cts)-Histogramms von Partikeln, die durch ein induktiv gekoppeltes Plasmamassenspektrometer (ICP-MS) detektiert werden, wobei die Intensität ($I_p$) eine Partikeldetektion repräsentiert und die Zählung (Cts) eine Partikeldetektionsfrequenz repräsentiert,

- Empfangen (S2) von Massenfluss-Kalibrierungsdaten, die einen Wert der Intensitätsmessung ($I_p$) oder Daten des induktiv gekoppelten Plasmamassenspektrometers mit einer Masse von Material in Beziehung setzen, die pro Erfassungsintervall oder Verweilzeit detektiert wird,

- Bestimmen (S3) einer Partikelmasse ($m_p$) der detektierten Partikel unter Verwendung der Massenfluss-Kalibrierungsdaten,

- Bestimmen (S4) eines Partikelvolumens ($V_p$) der detektierten Partikel unter Verwendung der bestimmten Partikelmasse ($m_p$) und

- Bestimmen (S5) einer Partikelgröße der detektierten Partikel unter Verwendung des bestimmten Partikelvolumens ($V_p$) der detektierten Partikel und einer bestimmten oder zugeordneten Geometrie oder Form der detektierten Partikel;

**dadurch gekennzeichnet, dass** das Intensität-($I_p$)-versus-Zählungen-(Cts)-Histogramm von Partikeln, die durch das induktiv gekoppelte Plasmamassenspektrometer (ICP-MS) detektiert werden, unter Verwendung von pro Erfassungsintervall oder Verweilzeit erhaltenen Intensitätsmessungen ($I_p$) bestimmt wird, die durch das induktiv gekoppelte Plasmamassenspektrometer erhalten werden, wobei das Erhalten über eine Gesamtzeitdauer wiederholt wurde, um eine Vielzahl der Intensitätsmessungen ($I_p$) pro Erfassungsintervall oder Verweilzeit zu erhalten, und wobei das Intensität-($I_p$)-versus-Zählungen-(Cts)-Histogramm bestimmt wird, indem (i) jede Intensitätsmessung ($I_p$) der Vielzahl der Intensitätsmessungen ($I_p$) pro Erfassungsintervall oder Verweilzeit mit (ii) der Anzahl von Malen, dass diese Intensitätsmessung ($I_p$) erhalten wurde, in Beziehung gesetzt wird, wobei die Intensitätsmessung ($I_p$) des Histogramms ein detektiertes Partikel betrifft und die Zählungen die Anzahl der Male betrifft, dass dieses Partikel detektiert wurde.

**Revendications**

1. Procédé de détermination de la taille et de comptage de particules par spectrométrie de masse à plasma à couplage inductif à particule unique, le procédé comprenant les étapes suivantes :

- fourniture ou réception (S1) d'un histogramme de l'intensité ($I_p$) en fonction du nombre de coups (Cts) de particules détectées par un spectromètre de masse à plasma à couplage inductif (ICP-MS), l'intensité ($I_p$) représentant la détection de particules et le nombre de coups (Cts) représentant la fréquence de détection de particules,

- fourniture ou réception (S2) de données d'étalonnage de flux massique associant une valeur de la mesure d'intensité ($I_p$) ou des données du spectromètre de masse à plasma à couplage inductif à une masse de matière détectée par intervalle d'acquisition ou temps de séjour,
- détermination (S3) d'une masse de particule ($m_p$) des particules détectées au moyen des données d'étalonnage de flux massique,
- détermination (S4) d'un volume de particule ($V_p$) des particules détectées au moyen de la masse de particule déterminée ($m_p$), et
- détermination (S5) d'une taille de particule des particules détectées au moyen du volume de particule déterminé ($V_p$) des particules détectées et d'une géométrie ou forme déterminée ou attribuée des particules détectées ;

**caractérisé en ce que** l'histogramme de l'intensité ($I_p$) en fonction du nombre de coups (Cts) de particules détectées par le spectromètre de masse à plasma à couplage inductif (ICP-MS) est déterminé au moyen de mesures d'intensité ($I_p$) obtenues par intervalle d'acquisition ou temps de séjour, obtenues par le spectromètre de masse à plasma à couplage inductif, l'obtention ayant été répétée sur une durée totale pour obtenir une pluralité desdites mesures d'intensité ($I_p$) par intervalle d'acquisition ou temps de séjour, et dans lequel

l'histogramme de l'intensité ($I_p$) en fonction du nombre de coups (Cts) est déterminé par association (i) de chaque mesure d'intensité ($I_p$) de la pluralité desdites mesures d'intensité ($I_p$) par intervalle d'acquisition ou temps de séjour (ii) au nombre de fois qu'une mesure d'intensité ($I_p$) a été obtenue, la mesure d'intensité ($I_p$) de l'histogramme se rapportant à une particule détectée, et le nombre de coups se rapportant au nombre de fois qu'une particule a été détectée.

2. Procédé selon la revendication 1, comportant en outre la détermination d'une atomicité de particule ou d'un nombre d'atomes dans la particule ($A_p$) des particules détectées au moyen de la masse de particule déterminée ($m_p$).

3. Procédé selon l'une quelconque des revendications précédentes, dans lequel la géométrie ou forme déterminée des particules détectées est prédéterminée par microscopie électronique.

4. Procédé selon l'une quelconque des revendications précédentes, dans lequel la taille de particule des particules détectées est déterminée au moyen d'un descripteur géométrique lié à la géométrie ou forme déterminée des particules détectées.

5. Procédé selon la revendication précédente, dans lequel le descripteur géométrique comprend ou consiste en une longueur d'arête de particule (el).

6. Procédé selon l'une quelconque des revendications précédentes, dans lequel la géométrie ou forme déterminée ou attribuée des particules détectées est sphérique, cubique, octaédrique cubique, octaédrique, octaédrique tronquée, tétraédrique, ou dodécaédrique rhombique.

7. Procédé selon la revendication précédente, dans lequel la géométrie ou forme déterminée ou attribuée des particules détectées est sphérique, et une longueur d'arête (el) est donnée par :

$$\mathrm{el_{Sph}} = \left(\frac{6V_p}{\pi}\right)^{1/3}$$

ou dans lequel la géométrie ou forme déterminée ou attribuée des particules détectées est cubique, et une longueur d'arête est la racine cubique du volume ($V_p$) :

$$\mathrm{el_{Cu}} = (V_p)^{1/3}$$

ou dans lequel la géométrie ou forme déterminée ou attribuée des particules détectées est cuboctaédrique, et une longueur d'arête est donnée par :

$$el_{CuOh} = \left(\frac{3V_p}{5\sqrt{2}}\right)^{1/3}$$

ou dans lequel la géométrie ou forme déterminée ou attribuée des particules détectées est octaédrique, et une longueur d'arête est donnée par :

$$el_{Oh} = \left(\frac{3V_p}{\sqrt{3}}\right)^{1/3}$$

ou dans lequel la géométrie ou forme déterminée ou attribuée des particules détectées est une forme octaédrique tronquée, et une longueur d'arête (el) est donnée par :

$$el_{TOh} = \left(\frac{V_p}{8\sqrt{2}}\right)^{1/3}$$

ou dans lequel la géométrie ou forme déterminée ou attribuée des particules détectées est tétraédrique, et une longueur d'arête (el) est donnée par :

$$el_{Th} = \left(6\sqrt{2}V_p\right)^{1/3}$$

ou dans lequel la géométrie ou forme déterminée ou attribuée des particules détectées est dodécaédrique rhombique, et la longueur d'arête (el) est donnée par :

$$el_{RDh} = \left(\frac{9V_p}{16\sqrt{3}}\right)^{1/3}.$$

8. Procédé selon l'une quelconque des revendications 3 à 7 précédentes, dans lequel l'atomicité de particule ($A_p$) des particules détectées est déterminée au moyen de la masse de particule déterminée ($m_p$) et de la valeur de masse atomique des particules détectées ; ou

   dans lequel l'atomicité de particule ($A_p$) des particules détectées est déterminée au moyen de la masse de particule déterminée ($m_p$) et de la valeur de masse atomique des particules détectées, et dans lequel la valeur de masse atomique des particules détectées est une valeur de masse atomique prédéterminée ; ou
   dans lequel une distribution de composition de particule est déterminée au moyen de l'atomicité ($A_p$) des particules détectées ; ou
   dans lequel une distribution de composition de particule est déterminée au moyen de l'atomicité ($A_p$) des particules détectées, la distribution de composition de particule étant utilisée pour déterminer la structure de particule telle qu'une structure cœur-coquille, un mélange homogène et/ou une hétérostructure.

9. Procédé selon l'une quelconque des revendications précédentes, dans lequel la masse de particule ($m_p$) des particules détectées est calculée au moyen d'une valeur de pente (a) déterminée à partir des données d'étalonnage de flux massique ; ou

   dans lequel la masse de particule ($m_p$) des particules détectées est calculée au moyen de l'équation suivante :

$$m_p = \frac{I_p}{am_f\eta_i}$$

   où a est une valeur de pente déterminée à partir des données d'étalonnage de flux massique, $\eta_i$ est un facteur de correction d'efficacité d'ionisation ayant une valeur positive comprise entre 0 et 1, et $m_f$ est un facteur de fraction massique ayant une valeur positive comprise entre 0 et 1 ; ou
   dans lequel les données d'étalonnage de flux massique sont déterminées par conversion de données d'étalonnage de métal dissous ou au moins une courbe d'étalonnage de métal dissous associant une intensité mesurée à une concentration au moyen de l'équation suivante :

$$\Delta m = \eta_t t_d Q C$$

où $\eta_t$ est un facteur d'efficacité de transport corrigeant les pertes d'ions dans le spectromètre de masse à plasma à couplage inductif, $t_d$ est un temps de séjour ou un temps d'intervalle d'acquisition, Q un débit d'échantillon du spectromètre de masse à plasma à couplage inductif et C une concentration d'ions dissous.

**10.** Procédé selon l'une quelconque des revendications précédentes, dans lequel l'histogramme de l'intensité ($I_p$) en fonction du nombre de coups (Cts) est fourni par des mesures d'intensité ($I_p$) obtenues, et par suppression d'un signal d'intensité de fond des mesures d'intensité ($I_p$) ; ou
dans lequel l'histogramme de l'intensité ($I_p$) en fonction du nombre de coups (Cts) est fourni par des mesures d'intensité ($I_p$) obtenues, et par suppression d'un signal d'intensité de fond des mesures d'intensité ($I_p$), et dans lequel la suppression du signal de fond est réalisée par calcul d'une moyenne sur toutes les valeurs d'intensité et détermination d'un écart type ($\sigma$), et définition d'une détection de particule comme n'importe quelle valeur d'intensité qui est supérieure d'au moins 3 fois l'écart type ($\sigma$) + la moyenne ($\mu$) à une valeur d'intensité de fond, et établissement des détections de particule sur la base de leurs valeurs d'intensité respectives et sous la forme d'un histogramme du nombre de coups en fonction de l'intensité.

**11.** Procédé selon l'une quelconque des revendications précédentes, comportant en outre une étape de préparation d'échantillon ou de dilution comprenant l'utilisation d'un agent alkylant ou d'un agent alkylant faible pour réaliser une extraction de tensioactifs sur une pluralité de particules dont la taille doit être déterminée et qui doivent être comptées, afin de retirer des tensioactifs spécifiques et remplacer les tensioactifs spécifiques par au moins un contre-ion inorganique ; ou

comportant en outre une étape de préparation d'échantillon ou de dilution comprenant l'utilisation d'un agent alkylant ou d'un agent alkylant faible pour réaliser une extraction de tensioactifs sur une pluralité de particules dont la taille doit être déterminée et qui doivent être comptées, afin de retirer des tensioactifs spécifiques et remplacer les tensioactifs spécifiques par au moins un contre-ion inorganique, et comportant en outre une étape de lavage après l'introduction de l'agent alkylant ou de l'agent alkylant faible ; ou
comportant en outre une étape de préparation d'échantillon ou de dilution comprenant l'utilisation d'un agent alkylant ou d'un agent alkylant faible pour réaliser une extraction de tensioactifs sur une pluralité de particules dont la taille doit être déterminée et qui doivent être comptées, afin de retirer des tensioactifs spécifiques et remplacer les tensioactifs spécifiques par au moins un contre-ion inorganique, et comportant en outre une étape de lavage après l'introduction de l'agent alkylant ou de l'agent alkylant faible, la pluralité de particules ayant été préparée ou synthétisée dans des solvants organiques apolaires.

**12.** Procédé selon la revendication 11, dans lequel une concentration de l'agent alkylant ou de l'agent alkylant faible est déterminée pour réaliser une extraction de tensioactifs sans décapage ou avec un décapage minimal d'une surface des particules ; ou

dans lequel une concentration de l'agent alkylant ou de l'agent alkylant faible est déterminée pour réaliser une extraction de tensioactifs sans décapage ou avec un décapage minimal d'une surface des particules, et dans lequel l'agent alkylant ou l'agent alkylant faible comprend ou consiste en un sel de triéthyloxonium ; ou
dans lequel une concentration de l'agent alkylant ou de l'agent alkylant faible est déterminée pour réaliser une extraction de tensioactifs sans décapage ou avec un décapage minimal d'une surface des particules, et dans lequel l'agent alkylant ou l'agent alkylant faible comprend ou consiste en de l'hexafluorophosphate de triéthyloxonium ou du tétrafluoroborate de triéthyloxonium.

**13.** Procédé selon l'une quelconque des revendications 11 à 12 précédentes, comprenant en outre la dispersion des particules stabilisées avec un contre-ion inorganique dans un solvant polaire ; ou

comprenant en outre la dispersion des particules stabilisées avec un contre-ion inorganique dans un solvant polaire, et comprenant en outre la préparation d'une dispersion aqueuse ; ou
comprenant en outre la dispersion des particules stabilisées avec un contre-ion inorganique dans un solvant polaire, et comprenant en outre la préparation d'une dispersion aqueuse, et comprenant en outre la fourniture de la dispersion aqueuse à un spectromètre de masse à plasma à couplage inductif pour réaliser des mesures d'intensité ($I_p$) représentant la détection de particules en fonction du temps.

**14.** Système comportant :

- un processeur ; et
- une mémoire comportant un programme informatique comprenant des instructions qui, lors de l'exécution du programme informatique par le processeur, amènent le système à réaliser le procédé de la revendication 1, le procédé comprenant les étapes suivantes :

- réception (S1) d'un histogramme de l'intensité ($I_p$) en fonction du nombre de coups (Cts) de particules détectées par un spectromètre de masse à plasma à couplage inductif (ICP-MS), l'intensité ($I_p$) représentant la détection de particules et le nombre de coups (Cts) représentant la fréquence de détection de particules,
- réception (S2) de données d'étalonnage de flux massique associant une valeur de la mesure d'intensité ($I_p$) ou des données du spectromètre de masse à plasma à couplage inductif à une masse de matière détectée par intervalle d'acquisition ou temps de séjour,
- détermination (S3) d'une masse de particule ($m_p$) des particules détectées au moyen des données d'étalonnage de flux massique,
- détermination (S4) d'un volume de particule ($V_p$) des particules détectées au moyen de la masse de particule déterminée ($m_p$), et
- détermination (S5) d'une taille de particule des particules détectées au moyen du volume de particule déterminé ($V_p$) des particules détectées et d'une géométrie ou forme déterminée ou attribuée des particules détectées ; **caractérisé en ce que** l'histogramme de l'intensité ($I_p$) en fonction du nombre de coups (Cts) de particules détectées par le spectromètre de masse à plasma à couplage inductif (ICP-MS) est déterminé au moyen de mesures d'intensité ($I_p$) obtenues par intervalle d'acquisition ou temps de séjour, obtenues par le spectromètre de masse à plasma à couplage inductif, l'obtention ayant été répétée sur une durée totale pour obtenir une pluralité desdites mesures d'intensité ($I_p$) par intervalle d'acquisition ou temps de séjour, et dans lequel l'histogramme de l'intensité ($I_p$) en fonction du nombre de coups (Cts) est déterminé par association (i) de chaque mesure d'intensité ($I_p$) de la pluralité desdites mesures d'intensité ($I_p$) par intervalle d'acquisition ou temps de séjour (ii) au nombre de fois qu'une mesure d'intensité ($I_p$) a été obtenue, la mesure d'intensité ($I_p$) de l'histogramme se rapportant à une particule détectée, et le nombre de coups se rapportant au nombre de fois qu'une particule a été détectée.

**15.** Programme informatique comprenant des instructions qui, lors de l'exécution du programme par un ordinateur, amènent l'ordinateur à réaliser le procédé de la revendication 1, le procédé comprenant les étapes suivantes :

- réception (S1) d'un histogramme de l'intensité ($I_p$) en fonction du nombre de coups (Cts) de particules détectées par un spectromètre de masse à plasma à couplage inductif (ICP-MS), l'intensité ($I_p$) représentant la détection de particules et le nombre de coups (Cts) représentant la fréquence de détection de particules,
- réception (S2) de données d'étalonnage de flux massique associant une valeur de la mesure d'intensité ($I_p$) ou des données du spectromètre de masse à plasma à couplage inductif à une masse de matière détectée par intervalle d'acquisition ou temps de séjour,
- détermination (S3) d'une masse de particule ($m_p$) des particules détectées au moyen des données d'étalonnage de flux massique,
- détermination (S4) d'un volume de particule ($V_p$) des particules détectées au moyen de la masse de particule déterminée ($m_p$), et
- détermination (S5) d'une taille de particule des particules détectées au moyen du volume de particule déterminé ($V_p$) des particules détectées et d'une géométrie ou forme déterminée ou attribuée des particules détectées ;

**caractérisé en ce que** l'histogramme de l'intensité ($I_p$) en fonction du nombre de coups (Cts) de particules détectées par le spectromètre de masse à plasma à couplage inductif (ICP-MS) est déterminé au moyen de mesures d'intensité ($I_p$) obtenues par intervalle d'acquisition ou temps de séjour, obtenues par le spectromètre de masse à plasma à couplage inductif, l'obtention ayant été répétée sur une durée totale pour obtenir une pluralité desdites mesures d'intensité ($I_p$) par intervalle d'acquisition ou temps de séjour, et dans lequel l'histogramme de l'intensité ($I_p$) en fonction du nombre de coups (Cts) est déterminé par association (i) de chaque mesure d'intensité ($I_p$) de la pluralité desdites mesures d'intensité ($I_p$) par intervalle d'acquisition ou temps de séjour (ii) au nombre de fois qu'une mesure d'intensité ($I_p$) a été obtenue, la mesure d'intensité ($I_p$) de l'histogramme se rapportant à une particule détectée, et le nombre de coups se rapportant au nombre de fois qu'une particule a été détectée.

**Figure 1**

Figure 2

Figure 3

Figure 4

Figure 5

Figure 6

Figure 7

**Figure 8**

Figure 9

Figure 10

**Figure 11**

Figure 12

Figure 13

EP 4 437 321 B1

43

Figure 14

Figure 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 21210751

- US 2015235833 A1

**Non-patent literature cited in the description**

- **JONES, M. R.** ; **OSBERG, K. D.** ; **MACFARLANE, R. J.** ; **LANGILLE, M. R.** ; **MIRKIN, C. A.** Templated Techniques for the Synthesis and Assembly of Plasmonic Nanostructures.. *Chem. Rev.*, 2011, vol. 111 (6), 3736-3827, https://doi.org/10.1021/cr1004452
- **XIA, Y.** ; **XIONG, Y.** ; **LIM, B.** ; **SKRABALAK, S. E.** Shape-Controlled Synthesis of Metal Nanocrystals: Simple Chemistry Meets Complex Physics?. *Angew. Chem. Int. Ed.*, 2009, vol. 48 (1), 60-103, https://doi.org/10.1002/anie. 200802248
- **LIU, L.** ; **CORMA, A.** Metal Catalysts for Heterogeneous Catalysis: From Single Atoms to Nanoclusters and Nanoparticles.. *Chem. Rev.*, 2018, vol. 118 (10), 4981-5079, https://doi.org/10.1021/acs.chemrev.7b00776
- **KLEIJN, S. E. F.** ; **LAI, S. C. S.** ; **KOPER, M. T. M.** ; **UNWIN, P. R.** Electrochemistry of Nanoparticles.. *Angew. Chem. Int. Ed.*, 2014, vol. 53 (14), 3558-3586, https://doi.org/10.1002/anie.201306828
- **CHEN, C.** ; **KANG, Y.** ; **HUO, Z.** ; **ZHU, Z.** ; **HUANG, W.** ; **XIN, H. L.** ; **SNYDER, J. D.** ; **LI, D.** ; **HERRON, J. A.** ; **MAVRIKAKIS, M.** Highly Crystalline Multimetallic Nanoframes with Three-Dimensional Electrocatalytic Surfaces.. *Science*, 2014, vol. 343 (6177), 1339-1343, https://doi.org/10.1126/science. 1249061.
- **CHOUKROUN, D.** ; **PACQUETS, L.** ; **LI, C.** ; **HOEKX, S.** ; **AMOUTS, S.** ; **BAERT, K.** ; **HAUFFMAN, T.** ; **BALS, S.** ; **BREUGELMANS, T.** Mapping Composition-Selectivity Relationships of Supported Sub-10 Nm Cu-Ag Nanocrystals for High-Rate CO2 Electroreduction.. *ACS Nano*, 2021, https://doi.org/10.1021/acsnano.1c04943
- Particle Analysis.. *ImageJ Wiki.*, 21 September 2021, https://imagej.github.io/imaging/particle-analysis
- **MONDINI, S.** ; **FERRETTI, A. M.** ; **PUGLISI, A.** ; **PONTI, A.** PEBBLES and PEBBLEJUGGLER: Software for Accurate, Unbiased, and Fast Measurement and Analysis of Nanoparticle Morphology from Transmission Electron Microscopy (TEM) Micrographs.. *Nanoscale*, 2012, vol. 4 (17), 5356-5372, https://doi.org/10.1039/C2NR31276J

- **LARAMY, C. R.** ; **BROWN, K. A.** ; **O'BRIEN, M. N.** ; **MIRKIN, CHAD.** A. High-Throughput, Algorithmic Determination of Nanoparticle Structure from Electron Microscopy Images.. *ACS Nano*, 2015, vol. 9 (12), 12488-12495, https://doi.org/10.1021/acsnano.5b05968
- **LEE, B.** ; **YOON, S.** ; **LEE, J. W.** ; **KIM, Y** ; **CHANG, J.** ; **YUN, J.** ; **RO, J. C.** ; **LEE, J.-S.** ; **LEE, J. H.** Statistical Characterization of the Morphologies of Nanoparticles through Machine Learning Based Electron Microscopy Image Analysis.. *ACS Nano*, 2020, vol. 14 (12), 17125-17133, https://doi.org/10.1021/acsnano.0c06809
- Many-Particle Spectroscopy of Atoms, Molecules, Clusters, and Surfaces. Springer US, 2001
- Front Matter.. Inductively Coupled Plasma Mass Spectrometry Handbook. John Wiley & Sons, Ltd, 2005
- **MOZHAYEVA, D.** ; **ENGELHARD, C.** A Critical Review of Single Particle Inductively Coupled Plasma Mass Spectrometry - A Step towards an Ideal Method for Nanomaterial Characterization.. *J. Anal. At. Spectrom.*, 2020, vol. 35 (9), 1740-1783, https://doi.org/10.1039/C9JA00206E
- **PACE, H. E.** ; **ROGERS, N. J.** ; **JAROLIMEK, C.** ; **COLEMAN, V. A.** ; **HIGGINS, C. P.** ; **RANVILLE, J. F.** Determining Transport Efficiency for the Purpose of Counting and Sizing Nanoparticles via Single Particle Inductively Coupled Plasma Mass Spectrometry.. *Anal. Chem.*, 2011, vol. 83 (24), 9361-9369, https://doi.org/10.1021/ac201952t
- **PACE, H. E.** ; **ROGERS, N. J.** ; **JAROLIMEK, C.** ; **COLEMAN, V. A.** ; **HIGGINS, C. P.** ; **RANVILLE, J. F.** Correction to Determining Transport Efficiency for the Purpose of Counting and Sizing Nanoparticles via Single Particle Inductively Coupled Plasma Mass Spectrometry.. *Anal. Chem.*, 2012, vol. 84 (10), 4633-4633, https://doi.org/10.1021/ac300942m

- **LIU, J.** ; **MURPHY, K. E.** ; **MACCUSPIE, R. I.** ; **WINCHESTER, M. R.** Capabilities of Single Particle Inductively Coupled Plasma Mass Spectrometry for the Size Measurement of Nanoparticles: A Case Study on Gold Nanoparticles.. *Anal. Chem.*, 2014, vol. 86 (7), 3405-3414, https://doi.org/10.1021/ac403775a

- **HADIOUI, M.** ; **KNAPP, G.** ; **AZIMZADA, A.** ; **JREIJE, I.** ; **FRECHETTE-VIENS, L.** ; **WILKINSON, K. J.** Lowering the Size Detection Limits of Ag and TiO2 Nanoparticles by Single Particle ICP-MS.. *Anal. Chem.*, 2019, vol. 91 (20), 13275-13284, https://doi.org/10.1021/acs.analchem.9b04007

- **HENDRIKS, L.** ; **GUNDLACH-GRAHAM, A.** ; **GÜNTHER, D.** Analysis of Inorganic Nanoparticles by Single-Particle Inductively Coupled Plasma Time-of-Flight Mass Spectrometry.. *Chim. Int. J. Chem.*, 2018, vol. 72 (4), 221-226, https://doi.org/10.2533/chimia.2018.221

- **FOLENS, K.** ; **VAN ACKER, T.** ; **BOLEA-FERNAN-DEZ, E.** ; **CORNELIS, G.** ; **VANHAECKE, F.** ; **DU LAING, G.** ; **RAUCH, S.** Identification of Platinum Nanoparticles in Road Dust Leachate by Single Particle Inductively Coupled Plasma-Mass Spectrometry.. *Sci. Total Environ.*, 2018, vol. 615, 849-856, https://doi.org/10.1016/j.scitotenv.2017.09.285

- **THOMAS, R.** Practical Guide to ICP-MS. CRC Press, 2013

- **DEGUELDRE, C.** ; **FAVARGER, P.-Y.** ; **WOLD, S.** Gold Colloid Analysis by Inductively Coupled Plasma-Mass Spectrometry in a Single Particle Mode.. *Anal. Chim. Acta*, 2006, vol. 555 (2), 263-268, https://doi.org/10.1016/j.aca.2005.09.021

- **DEGUELDRE, C.** ; **FAVARGER, P.-Y.** ; **ROSSÉ, R.** ; **WOLD, S.** Uranium Colloid Analysis by Single Particle Inductively Coupled Plasma-Mass Spectrometry.. *Talanta*, 2006, vol. 68 (3), 623-628, https://doi.org/10.1016/j.talanta.2005.05.006

- **RAMKORUN-SCHMIDT, B.** ; **PERGANTIS, S. A.** ; **ESTEBAN-FERNÁNDEZ, D.** ; **JAKUBOWSKI, N.** ; **GÜNTHER, D.** Investigation of a Combined Microdroplet Generator and Pneumatic Nebulization System for Quantitative Determination of Metal-Containing Nanoparticles Using ICPMS.. *Anal. Chem.*, 2015, vol. 87 (17), 8687-8694, https://doi.org/10.1021/acs.analchem.5b01604

- **HO, K.-S.** ; **LUI, K.-O.** ; **LEE, K.-H.** ; **CHAN, W.-T.** Considerations of Particle Vaporization and Analyte Diffusion in Single-Particle Inductively Coupled Plasma-Mass Spectrometry.. *Spectrochim. Acta Part B At. Spectrosc.*, 2013, vol. 89, 30-39, https://doi.org/10.1016/j.sab.2013.08.012

- **SKRABALAK, S. E.** ; **AU, L.** ; **LI, X.** ; **XIA, Y.** Facile Synthesis of Ag Nanocubes and Au Nanocages.. *Nat. Protoc.*, 2007, vol. 2 (9), 2182-2190, https://doi.org/10.1038/nprot.2007.326

- **LIM, B.** ; **JIANG, M.** ; **CAMARGO, P. H. C.** ; **CHO, E. C.** ; **TAO, J.** ; **LU, X.** ; **ZHU, Y.** ; **XIA, Y.** Pd-Pt Bimetallic Nanodendrites with High Activity for Oxygen Reduction.. *Science*, 2009, vol. 324 (5932), 1302-1305, https://doi.org/10.1126/science.1170377

- **HE, R.** ; **WANG, Y.-C.** ; **WANG, X.** ; **WANG, Z.** ; **LIU, G.** ; **ZHOU, W.** ; **WEN, L.** ; **LI, Q.** ; **WANG, X.** ; **CHEN, X.** Facile Synthesis of Pentacle Gold-Copper Alloy Nanocrystals and Their Plasmonic and Catalytic Properties.. *Nat. Commun.*, 2014, vol. 5 (1), 1-10, https://doi.org/10.1038/ncomms5327

- **MURRAY, C. B.** ; **NORRIS, D. J.** ; **BAWENDI, M. G.** Synthesis and Characterization of Nearly Monodisperse CdE (E = Sulfur, Selenium, Tellurium) Semiconductor Nanocrystallites.. *J. Am. Chem. Soc.*, 1993, vol. 115 (19), 8706-8715, https://doi.org/10.1021/ja00072a025

- **PROTESESCU, L.** ; **YAKUNIN, S.** ; **BODNARCHUK, M. I.** ; **KRIEG, F.** ; **CAPUTO, R.** ; **HENDON, C. H.** ; **YANG, R. X.** ; **WALSH, A.** ; **KOVALENKO, M. V.** Nanocrystals of Cesium Lead Halide Perovskites (CsPbX3, X = Cl, Br, and I): Novel Optoelectronic Materials Showing Bright Emission with Wide Color Gamut.. *Nano Lett.*, 2015, vol. 15 (6), 3692-3696, https://doi.org/10.1021/nl5048779

- **BERNAL, M.;** ; **BAGGER, A.** ; **SCHOLTEN, F.** ; **SINEV, I.** ; **BERGMANN, A.** ; **AHMADI, M.** ; **ROSSMEISL, J.** ; **CUENYA, B. R.** CO2 Electroreduction on Copper-Cobalt Nanoparticles: Size and Composition Effect.. *Nano Energy*, 2018, vol. 53, 27-36, https://doi.org/10.1016/j.nanoen.2018.08.027

- **TAO, A. R.** ; **HABAS, S.** ; **YANG, P.** Shape Control of Colloidal Metal Nanocrystals.. *Small*, 2008, vol. 4 (3), 310-325, https://doi.org/10.1002/smll.200701295

- **JACKSON, W. M.** ; **DRURY, J. S.** Miscibility of Organic Solvent Pairs.. *Ind. Eng. Chem.*, 1959, vol. 51 (12), 1491-1493, https://doi.org/10.1021/ie50600a039

- **BOOM, A. W.** ; **BROWNER, R. F.** Effects of Organic Solvents in Inductively Coupled Plasma Atomic Emission Spectrometry.. *Anal. Chem.*, 1982, vol. 54 (8), 1402-1410, https://doi.org/10.1021/ac00245a033

- **RUCAREANU, S.** ; **MACCARINI, M.** ; **SHEPHERD, J. L.** ; **LENNOX, R. B.** Polymer-Capped Gold Nanoparticles by Ligand-Exchange Reactions.. *J. Mater. Chem.*, 2008, vol. 18 (47), 5830-5834, https://doi.org/10.1039/B806375C

- **DONG, A.** ; **YE, X.** ; **CHEN, J.** ; **KANG, Y.** ; **GORDON, T.** ; **KIKKAWA, J. M.** ; **MURRAY, C. B.** A Generalized Ligand-Exchange Strategy Enabling Sequential Surface Functionalization of Colloidal Nanocrystals.. *J. Am. Chem. Soc.*, 2011, vol. 133 (4), 998-1006, https://doi.org/10.1021/ja108948z

- **NAG, A.** ; **KOVALENKO, M. V.** ; **LEE, J.-S.** ; **LIU, W.** ; **SPOKOYNY, B.** ; **TALAPIN, D. V.** Metal-Free Inorganic Ligands for Colloidal Nanocrystals: S2-, HS-, Se2-, HSe-, Te2-, HTe-, TeS32-, OH-, and NH2- as Surface Ligands.. *J. Am. Chem. Soc.*, 2011, vol. 133 (27), 10612-10620, https://doi.org/10.1021/-ja2029415
- **MEERWEIN, H.** ; **HINZ, G.** ; **HOFMANN, P.** ; **KRONING, E.** ; **PFEIL, E.** Über Tertiäre Oxonium-salze, I.. *J. Für Prakt. Chem.*, 1937, vol. 147 (10-12), 257-285, https://doi.org/10.1002/prac.19371471001
- **ROSEN, E. L.** ; **BUONSANTI, R.** ; **LLORDES, A.** ; **SAWVEL, A. M.** ; **MILLIRON, D. J.** ; **HELMS, B. A.** Exceptionally Mild Reactive Stripping of Native Ligands from Nanocrystal Surfaces by Using Meerwein's Salt.. *Angew. Chem. Int. Ed.*, 2012, vol. 51 (3), 684-689, https://doi.org/10.1002/anie.201105996
- **SHAW, P.** ; **DONARD, A.** Nano-Particle Analysis Using Dwell Times between 10 Ms and 70 Ms with an Upper Counting Limit of Greater than 3 × 10 7 Cps and a Gold Nanoparticle Detection Limit of Less than 10 Nm Diameter.. *J. Anal. At. Spectrom.*, 2016, vol. 31 (6), 1234-1242, https://doi.org/10.1039/C6-JA00047A
- **STRENGE, I.** ; **ENGELHARD, C.** Single Particle Inductively Coupled Plasma Mass Spectrometry: Investigating Nonlinear Response Observed in Pulse Counting Mode and Extending the Linear Dynamic Range by Compensating for Dead Time Related Count Losses on a Microsecond Timescale.. *J. Anal. At. Spectrom.*, 2020, vol. 35 (1), 84-99, https://doi.org/10.1039/C9JA00327D
- **LEE, S.** ; **BI, X.** ; **REED, R. B.** ; **RANVILLE, J. F.** ; **HERCKES, P.** ; **WESTERHOFF, P.** Nanoparticle Size Detection Limits by Single Particle ICP-MS for 40 Elements.. *Environ. Sci. Technol.*, 2014, vol. 48 (17), 10291-10300, https://doi.org/10.1021/es502422v
- **RESKE, R.** ; **MISTRY, H.** ; **BEHAFARID, F.** ; **ROLDAN CUENYA, B.** ; **STRASSER, P.** Particle Size Effects in the Catalytic Electroreduction of CO2 on Cu Nanoparticles.. *J. Am. Chem. Soc.*, 2014, vol. 136 (19), 6978-6986, https://doi.org/10.1021/-ja500328k
- **HOU, Y** ; **KOVÁCS, N.** ; **XU, H.** ; **SUN, C.** ; **ERNI, R.** ; **GÁLVEZ-VÁZQUEZ, M. DE J.** ; **RIEDER, A.** ; **HU, H.** ; **KONG, Y.** ; **LIU, M.** Limitations of Identical Location SEM as a Method of Degradation Studies on Surfactant Capped Nanoparticle Electrocatalysts.. *J. Catal.*, 2021, vol. 394, 58-66, https://doi.org/10.1016/j.jcat.2020.12.006
- **MERRIFIELD, R. C.** ; **STEPHAN, C.** ; **LEAD, J. R.** Single-Particle Inductively Coupled Plasma Mass Spectroscopy Analysis of Size and Number Concentration in Mixtures of Monometallic and Bimetallic (Core-Shell) Nanoparticles.. *Talanta*, 2017, 130-134, https://doi.org/10.1016/j.talanta.2016.09.070
- **BOROVINSKAYA, O.** ; **HATTENDORF, B.** ; **TANNER, M.** ; **GSCHWIND, S.** ; **GÜNTHER, D.** A Prototype of a New Inductively Coupled Plasma Time-of-Flight Mass Spectrometer Providing Temporally Resolved, Multi-Element Detection of Short Signals Generated by Single Particles and Droplets.. *J. Anal. At. Spectrom.*, 2013, vol. 28 (2), 226-233, https://doi.org/10.1039/C2JA30227F
- **PRAETORIUS, A.** ; **GUNDLACH-GRAHAM, A.** ; **GOLDBERG, E.** ; **FABIENKE, W.** ; **NAVRATILOVA, J.** ; **GONDIKAS, A.** ; **KAEGI, R.** ; **GÜNTHER, D.** ; **HOFMANN, T.** ; **KAMMER, F. VON DER.** Single-Particle Multi-Element Fingerprinting (SpMEF) Using Inductively-Coupled Plasma Time-of-Flight Mass Spectrometry (ICP-TOFMS) to Identify Engineered Nanoparticles against the Elevated Natural Background in Soils.. *Environ. Sci. Nano*, 2017, vol. 4 (2), 307-314, https://doi.org/10.1039/C6EN00455E
- **NAASZ, S.** ; **WEIGEL, S.** ; **BOROVINSKAYA, O.** ; **SERVA, A.** ; **CASCIO, C.** ; **UNDAS, A. K.** ; **SIMEONE, F. C.** ; **MARVIN, H. J. P.** ; **PETERS, R. J. B.** Multi-Element Analysis of Single Nanoparticles by ICP-MS Using Quadrupole and Time-of-Flight Technologies.. *J. Anal. At. Spectrom.*, 2018, vol. 33 (5), 835-845, https://doi.org/10.1039/C7JA00399D.